# EUROPEAN PATENT APPLICATION

(11) **EP 4 769 612 A1**
(43) Date of publication of application: **01.07.2026**
(21) Application number: 24861527.0
(22) Date of filing: 07.05.2024
(51) Int. Cl.: H01M 10/0525, H01M 10/0587, H01M 4/13, H01M 50/533, H01M 50/40, H01M 50/204

(54) **BATTERY CELL AND BATTERY MODULE**

(30) Priority: 05.09.2023 CN 202311138884
(71) Applicant: Sunwoda Mobility Energy Technology Co., Ltd., Shenzhen, Guangdong 518107 (CN)
(72) Inventor: XU, Lun, Shenzhen, Guangdong 518107 (CN)
(74) Representative: Elzaburu S.L.P.
(86) International application number: PCT/CN2024/091401
(87) International publication number: WO 2025/050678

(57) **Abstract**

A battery cell and a battery module. The battery cell includes a housing; and an electrode assembly accommodated in the housing. The electrode assembly includes a positive electrode sheet, a separator, and a negative electrode sheet that are stacked together, the separator is provided between the positive electrode sheet and the negative electrode sheet, and the positive electrode sheet, the negative electrode sheet, and the separator are wound together to form the electrode assembly. The negative electrode sheet includes: a negative electrode substrate; a negative electrode active material layer coated on the negative electrode substrate; and a negative electrode tab extending in a first direction and connected to the negative electrode substrate. The battery cell satisfies: 2.702 ≤ 2H₁-2T₁×n-(T₂-T₃) ≤ 19.958. According to the present application, the cycle life of the battery cell is enhanced, and the comprehensive performance of the battery cell is further improved.

## Description

The present application claims priority to Chinese patent application No. 202311138884.2 filed with China National Intellectual Property Administration on September 5, 2023, and entitled "Battery Cell and Battery Module", which is hereby incorporated by reference in its entirety.

### TECHNICAL FIELD

Embodiments of the present application relate to, but are not limited to, the technical field of batteries, and in particular relate to a battery cell and a battery module.

### BACKGROUND

With the rapid development of mobile phones, laptops, electric vehicles, electric tools, etc., lithium-ion batteries having high energy density, long cycle life, and excellent safety performance have been widely applied and developed. There is an urgent need for lithium-ion batteries with higher capacity, greater durability, and longer endurance capacity.

### Technical problem

The present application provides a battery cell and a battery module to improve cycle life, thereby enhancing comprehensive performance of the battery cell.

### Technical solution

The subject matters described in detail in this specification are summarized hereinafter. This summary is not intended to limit the scope of the claims.

In a first aspect, a battery cell is provided, where the battery cell has a first direction, and includes: a housing; and
an electrode assembly, accommodated in the housing;
the electrode assembly includes: a positive electrode sheet, a separator, and a negative electrode sheet that are stacked together, where the separator is provided between the positive electrode sheet and the negative electrode sheet, and the positive electrode sheet, the negative electrode sheet, and the separator are wound together to form the electrode assembly;
the negative electrode sheet includes:
   a negative electrode substrate;
   a negative electrode active material layer, coated on the negative electrode substrate; and
   a negative electrode tab, extending along the first direction and connected to the negative electrode substrate;
   where the battery cell satisfies: 2.702 ≤ 2H₁-2T₁×n-(T₂-T₃) ≤ 19.958;
   where H₁ mm is a length of the negative electrode tab in the first direction, T₁ mm is a thickness of the separator, n is the number of separator-only winding turns of the separator, T₂ mm is a total thickness of the negative electrode substrate and the negative electrode active material layer, and T₃ mm is a thickness of the negative electrode substrate.

Optionally, the battery cell further satisfies: 7.5045 ≤ 2H₁-2T₁×n-(T₂-T₃) ≤ 11.818.

Optionally, the length H₁ mm of the negative electrode tab in the first direction further satisfies: 2 ≤ H₁ ≤ 10.

Optionally, the length H₁ mm of the negative electrode tab in the first direction further satisfies: 4 ≤ H₁ ≤ 6.

Optionally, the positive electrode sheet includes: a positive electrode substrate;
a positive electrode active material layer, coated on the positive electrode substrate; and
a positive electrode tab, extending along the first direction and connected to the positive electrode substrate;
the battery cell further satisfies: 1.622 ≤ 2H₂-2T₁×(n+2)-2T₂-(T₄-T₅) ≤ 19.844;
where H₂ mm is a length of the positive electrode tab in the first direction, T₄ mm is a total thickness of the positive electrode substrate and the positive electrode active material layer, and T₅ mm is a thickness of the positive electrode substrate.

Optionally, the battery cell further satisfies: 7.05 ≤ 2H₂-2T₁×(n+2)-2T₂-(T₄-T₅) ≤ 11.589.

Optionally, the length H₂ mm of the positive electrode tab in the first direction satisfies: 2 ≤ H₂ ≤ 10.

Optionally, the length H₂ mm of the positive electrode tab in the first direction further satisfies: 4 ≤ H₂ ≤ 6.

Optionally, the thickness T₁ mm of the separator satisfies: 0.006 ≤ T₁ ≤ 0.02.

Optionally, the thickness T₁ mm of the separator satisfies: 0.009 ≤ T₁ ≤ 0.015.

Optionally, the number of separator-only winding turns n of the separator satisfies: 0 < n ≤ 20.

Optionally, the number of separator-only winding turns n of the separator satisfies: 5 ≤ n ≤ 10.

Optionally, the total thickness T₂ mm of the negative electrode substrate and the negative electrode active material layer satisfies: 0.05 ≤ T₂ ≤ 0.5.

Optionally, the thickness T₃ mm of the negative electrode substrate satisfies: 0.002 ≤ T₃ ≤ 0.02.

Optionally, the total thickness T₂ mm of the negative electrode substrate and the negative electrode active material layer satisfies: 0.1 ≤ T₂ ≤ 0.2.

Optionally, the thickness T₃ mm of the negative electrode substrate satisfies: 0.0045 ≤ T₃ ≤ 0.008.

Optionally, the total thickness T₄ mm of the positive electrode substrate and the positive electrode active material layer satisfies: 0.05≤T₄≤0.5.

Optionally, the thickness T₅ mm of the positive electrode substrate satisfies: 0.002 ≤ T₅ ≤ 0.03.

Optionally, the total thickness T₄ mm of the positive electrode substrate and the positive electrode active material layer satisfies: 0.1≤T₄≤0.2.

Optionally, the thickness T₅ mm of the positive electrode substrate satisfies: 0.01 ≤ T₅ ≤ 0.015.

Optionally, when the positive electrode sheet is unfolded, the positive electrode sheet has a second direction intersecting the first direction, and a dimension of the positive electrode tab in the second direction is L₁ mm, satisfying: 1 ≤ L₁ ≤ 10; and/or
a distance between two adjacent positive electrode tabs in the second direction is W₁ mm, satisfying: 0 < W₁ ≤ 5; and/or
the positive electrode tab has an axis, and an angle between the axis of the positive electrode tab and the second direction is α₁, satisfying: 0 < α₁ ≤ 90°.

Optionally, when the negative electrode sheet is unfolded, the negative electrode sheet has a second direction intersecting the first direction, and a dimension of the negative electrode tab in the second direction is L₂ mm, satisfying: 1 ≤ L₂ ≤ 10; and/or
a distance between two adjacent negative electrode tabs in the second direction is W₂ mm, satisfying: 0 < W₂ ≤ 5; and/or
the negative electrode tab has an axis, and an angle between the axis of the negative electrode tab and the second direction is α₂, satisfying: 0 < α₂ ≤ 90°.

Optionally, the dimension L₁ mm of the positive electrode tab in the second direction satisfies: 3 ≤ L₁ ≤ 5; and/or
the distance W₁ mm between two adjacent positive electrode tabs in the second direction satisfies: 0 < W₁ ≤ 2; and/or
the angle α between the axis of the positive electrode tab and the second direction satisfies: 30° ≤ α₁ ≤ 60°.

Optionally, the dimension L₂ mm of the negative electrode tab in the second direction satisfies: 3 ≤ L₂ ≤ 5; and/or
the distance W₂ mm between two adjacent negative electrode tabs in the second direction satisfies: 0 < W₂ ≤ 2; and/or
the angle α₂ between the axis of the negative electrode tab and the second direction satisfies: 30° ≤ α₂ ≤ 60°.

On the other hand, a battery module is further provided; and the battery module includes an accommodating box and the battery cell according to any one of the above, where the battery cell is accommodated within the accommodating box.

### Beneficial effect

Compared to existing technologies, the battery cell in the present application satisfies: 2.702 ≤ 2H₁-2T₁×n-(T₂-T₃) ≤ 19.958. By designing the length of the negative electrode tab, the thickness of the separator and the number of separator-only winding turns, the thickness of the negative electrode sheet and the thickness of the negative electrode substrate in the battery cell, the cycle life of the battery cell is improved, thereby enhancing the comprehensive performance of the battery cell.

### BRIEF DESCRIPTION OF DRAWINGS

FIG. 1 is a cross-sectional view of a battery cell according to an embodiment of the present application.
FIG. 2 is a schematic structural diagram of a positive electrode sheet according to an embodiment of the present application.
FIG. 3 is a schematic structural diagram of a negative electrode sheet according to an embodiment of the present application.

### Illustration for reference signs:

100. Battery cell; 110. Negative electrode sheet; 111. Negative electrode substrate; 112. Negative electrode active material layer; 113. Negative electrode tab; 120. Positive electrode sheet; 121. Positive electrode substrate; 122. Positive electrode active material layer; 123. Positive electrode tab; 130. Separator.

### DESCRIPTION OF EMBODIMENTS

The technical solutions in the embodiments of the present application will be clearly and completely described hereinafter with reference to the accompanying drawings in the embodiments of the present application. The embodiments described are only a part of the embodiments of the present application, not all of them. All other embodiments obtained by those skilled in the art based on the embodiments of the present application without creative labor shall fall within the protection scope of the present application.

The following disclosure provides many different embodiments or examples for implementing various structures in the present application. To simplify the disclosure of the present application, parts and configurations in the specific examples are described hereinafter. Certainly, they are merely examples and are not intended to limit the present application.

Currently, existing lithium-ion batteries generally consist of components such as a positive electrode sheet, a negative electrode sheet, and a separator. The performance of the lithium-ion batteries is closely related to these components, for example, parameters such as a thickness of the positive electrode sheet, a thickness of the negative electrode sheet, and a thickness of the separator can all influence the performance of the lithium-ion batteries. How to enhance the cycle life of the lithium-ion batteries to further improve their comprehensive performance based on these components, such as the positive electrode sheet, the negative electrode sheet and the separator, has become an urgent problem to be solved.

In order to improve the above problem, by designing a length of the negative electrode tab, the thickness of the separator and the number of separator-only winding turns, the thickness of the negative electrode sheet and a thickness of the negative electrode substrate in a battery cell in the present application, the cycle life of the battery cell is improved, thereby enhancing the comprehensive performance of the battery cell.

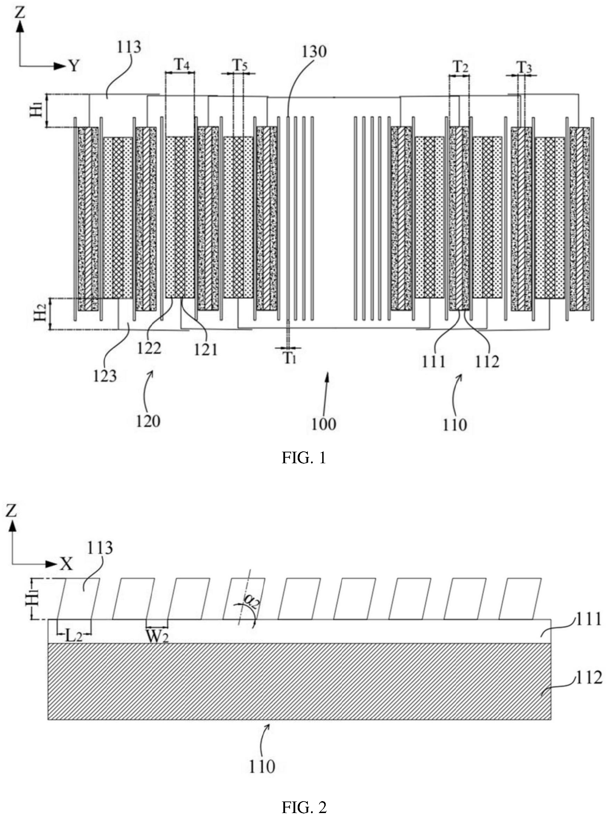

In the embodiments of the present application, referring to FIGS. 1-3, the present application provides a battery cell 100.

The battery cell 100 above can be a secondary battery or primary battery, and can also be a lithium-sulfur battery, a sodium-ion battery, or a magnesium-ion battery, but is not limited to these. The battery cell 100 can have a cylindrical shape, a flat shape, a rectangular shape, or other shapes.

Specifically, the battery cell 100 has a first direction Z and a third direction Y intersecting with each other. The battery cell 100 includes: a housing; and an electrode assembly accommodated within the housing. The electrode assembly includes: a positive electrode sheet 120, a separator 130, and a negative electrode sheet 110 that are stacked together, and the separator 130 is positioned between the positive electrode sheet 120 and the negative electrode sheet 110; and the positive electrode sheet 120, the negative electrode sheet 110 and the separator 130 are wound together to form the electrode assembly. The negative electrode sheet 110 above includes: a negative electrode substrate 111, a negative electrode active material layer 112 coated on the negative electrode substrate 111, and a negative electrode tab 113 extending along the first direction Z and connected to the negative electrode substrate 111. The battery cell 100 above satisfies: 2.702 ≤ 2H₁-2T₁×n-(T₂-T₃) ≤ 19.958. That is, the 2H₁-2T₁×n-(T₂-T₃) can be controlled within a range of 2.702-19.958. For example, the 2H₁-2T₁×n-(T₂-T₃) can be one of 2.702, 3, 4, 5, 6, 7, 8, 9, 10, 11, 12, 13, 14, 15, 16, 17, 18, 19, and 19.958, or a range composed of any two of these values. It should be noted that the specific values of the 2H₁-2T₁×n-(T₂-T₃) mentioned above are merely exemplarily given, and any value within the range of 2.702-19.958 falls within the protection scope of the present application. The H₁ mm is the length of the negative electrode tab 113 in the first direction Z; the T₁ mm is the thickness of the separator 130, optionally, the T₁ mm is the thickness of the separator 130 in the third direction Y; n is the number of separator-only winding turns of the separator 130, where the number of separator-only winding turns refers to the number of winding turns in the electrode assembly where only multiple layers of separator are stacked during the initial winding process. The number of separator-only winding turns n of the separator 130 can be determined by the staff through direct observation of the wound electrode assembly. Alternatively, the wound electrode assembly can be unfolded, and at a position where only the separator is sandwiched between two adjacent layers of the negative electrode sheet, the number of the separator layer sandwiched between these two layers of negative electrode sheet is calculated as the value of the number of separator-only winding turns n. It should be noted that if the separator-only winding is less than one turn, it is counted as one turn.

The T₂ mm is a total thickness of the negative electrode substrate 111 and the negative electrode active material layer 112. Optionally, the T₂ mm is the total thickness of the negative electrode substrate 111 and the negative electrode active material layer 112 in the third direction Y. The T₃ mm is the thickness of the negative electrode substrate 111. Optionally, the T₃ mm is the thickness of the negative electrode substrate 111 in the third direction Y.

It can be understood that in the present application, by controlling the battery cell to satisfy: 2.702 ≤ 2H₁-2T₁×n-(T₂-T₃) ≤ 19.958, and designing the length of the negative electrode tab, the thickness of the separator and the number of separator-only winding turns, the thickness of the negative electrode sheet and the thickness of the negative electrode substrate in the battery cell, the tab height is minimized while ensuring the flattened surface of the tab after flattening in different battery cells, thereby reducing the stacking height of the tab and increasing a height of the portion of the negative electrode sheet 110 having the negative electrode active material layer 112. This improves the cycle life of the battery cell while enhancing its energy density, thereby improving the comprehensive performance of the battery cell.

Optionally, the battery cell 100 above further satisfies: 7.5045 ≤ 2H₁-2T₁×n-(T₂-T₃) ≤ 11.818. That is, the 2H₁-2T₁×n-(T₂-T₃) can be controlled within the range of 7.5045-11.818. For example, the 2H₁-2T₁×n-(T₂-T₃) can be one of 7.5045, 8, 8.5, 9, 9.5, 10, 10.5, 11, 11.5, and 11.818, or a range composed of any two of these values. It should be noted that the specific values of the 2H₁-2T₁×n-(T₂-T₃) mentioned above are merely exemplarily given, and any value within the range of 7.5045-11.818 falls within the protection scope of the present application.

In one embodiment, the length H₁ mm of the negative electrode tab 113 in the first direction Z satisfies: 2≤H₁≤10. That is, the length H₁ mm of the negative electrode tab 113 in the first direction Z can be controlled within the range of 2 mm - 10 mm. For example, the length H₁ mm of the negative electrode tab 113 in the first direction Z may be one of 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, and 10 mm, or a range composed of any two of these values. It should be noted that the specific values of the length H₁ mentioned above are merely exemplarily given, and any value within the range of 2 mm - 10 mm falls within the protection scope of the present application. By providing the height of the negative electrode tab 113 within the range of 2 mm - 10 mm, it ensures the welding strength between the negative electrode tab and the current collector plate, and improves the energy density of the battery cell.

In one embodiment, the length H₁ mm of the negative electrode tab 113 in the first direction Z further satisfies: 4 ≤ H₁ ≤ 6. That is, the length H₁ mm of the negative electrode tab 113 in the first direction Z can be controlled within the range of 4 mm - 6 mm. For example, the length H₁ mm of the negative electrode tab 113 in the first direction Z may be one of 4 mm, 4.2 mm, 4.4 mm, 4.6 mm, 4.8 mm, 5 mm, 5.2 mm, 5.4 mm, 5.6 mm, 5.8 mm, and 6 mm, or a range composed of any two of these values. It should be noted that the specific values of the length H₁ mentioned above are merely exemplarily given, and any value within the range of 4 mm - 6 mm falls within the protection scope of the present application.

The length H₁ of the negative electrode tab 113 in the first direction Z can be directly measured when the negative electrode sheet 110 is in a wound state, or can be measured when the negative electrode sheet 110 is unfolded from the wound state to a flat state. Optionally, in the present application, the length H₁ of the negative electrode tab 113 in the first direction Z is determined by: unfolding firstly the negative electrode sheet 110, and flattening the unfolded positive electrode sheet 120 into a flat state, measuring the length of the negative electrode tab 113 at different positions in the first direction Z for multiple times using a measuring tool, and calculating an average value. The measuring tool can be either a straightedge or a vernier caliper.

It can be understood that in the present application, by providing that the length H₁ mm of the negative electrode tab 113 in the first direction Z is controlled within the range of 4 mm - 6 mm, the height of the negative electrode tab is minimized while ensuring the flattened surface of the tab after flattening, thereby reducing the stacking height of the negative electrode tab and increasing the height of the portion of the negative electrode sheet having the negative electrode active material layer. This enhances the energy density and the cycle life of the battery cell, thereby improving the comprehensive performance of the battery cell.

In one embodiment, the positive electrode sheet 120 includes: a positive electrode substrate 121, a positive electrode active material layer 122 coated on the positive electrode substrate 121, and a positive electrode tab 123 connected to the positive electrode substrate 121.

Specifically, the battery cell 100 further satisfies: 1.622 ≤ 2H₂-2T₁×(n+2)-2T₂-(T₄-T₅) ≤ 19.844. That is, the 2H₂-2T₁×(n+2)-2T₂-(T₄-T₅) can be controlled within a range of 1.622-19.844. For example, the 2H₂-2T₁×(n+2)-2T₂-(T₄-T₅) can be one of 1.622, 2, 3, 4, 5, 6, 7, 8, 9, 10, 11, 12, 13, 14, 15, 16, 17, 18, 19, and 19.844, or a range composed of any two of these values. It should be noted that the specific values of the 2H₂-2T₁× (n +2)- 2T₂-( T₄-T₅) mentioned above are merely exemplarily given, and any value within the range of 1.622- 19.844 falls within the protection scope of the present application.

The T₄ mm is a total thickness of the positive electrode substrate 121 and the positive electrode active material layer 122. Optionally, the T₄ mm is the total thickness of the positive electrode substrate 121 and the positive electrode active material layer 122 in the third direction Y. The T₅ mm is a thickness of the positive electrode substrate 121. Optionally, the T₅ mm is the thickness of the positive electrode substrate 121 in the third direction Y.

The parameters T₁, n, and T₂ have been explained as above. Since these parameters have already been described in detail earlier, the present application does not provide corresponding descriptions again, and reference may be made to to the preceding explanations.

It can be understood that, in the present application, by restricting the battery cell to satisfy: 1.622 ≤ 2H₂-2T₁×(n+2)-2T₂-(T₄-T₅) ≤ 19.844, and by designing the length of the positive electrode tab, the thickness of the separator, the number of separator-only winding turns, the thickness of the negative electrode sheet, the thickness of the positive electrode sheet, and the thickness of the positive electrode substrate in the battery cell, the height of the tab is minimized while ensuring the flattened surface of the tab after flattening in different battery cells, thereby reducing the stacking height of the tab and increasing the height of a portion of the positive electrode sheet 120 having the positive electrode active material layer 122. This enhances the cycle life of the battery cell while improving the energy density thereof, thereby improving the comprehensive performance of the battery cell.

Optionally, the battery cell 100 further satisfies: 7.05 ≤ 2H₂-2T₁×(n+2)-2T₂-(T₄-T₅) ≤ 11.589. That is, the 2H₂-2T₁×(n+2)-2T₂-(T₄-T₅) can be controlled within a range of 7.05-11.589. For example, the 2H₂-2T₁×(n+2)-2T₂-(T₄-T₅) can be one of 7.05, 7.5, 8, 8.5, 9, 9.5, 10, 10.5, 11, 11.5, and 11.589, or a range composed of any two of these values. It should be noted that the specific values of the 2H₂-2T₁× (n +2)-2T₂-(T₄-T₅) mentioned above are merely exemplarily given, and any value within the range of 7.05-11.589 falls within the protection scope of the present application.

In one embodiment, a length H₂ mm of the positive electrode tab 123 in the first direction Z further satisfies: 2 ≤ H₂ ≤ 10. The length H₂ mm of the positive electrode tab 123 in the first direction Z can be controlled within a range of 2 mm - 10 mm. For example, the length H₂ mm of the positive electrode tab 123 in the first direction Z may be one of 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, and 10 mm, or a range composed of any two of these values. It should be noted that the specific values of the length H₂ mm mentioned above are merely exemplarily given, and any value within the range of 2 mm - 10 mm falls within the protection scope of the present application.

Preferably, the length H₂ mm of the positive electrode tab 123 in the first direction Z as above further satisfies: 4 ≤ H₂ ≤ 6. That is, the length H₂ mm of the positive electrode tab 123 in the first direction Z can be controlled within a range of 4-6 mm. For example, the length H₂ mm of the positive electrode tab 123 in the first direction Z can be one of 4 mm, 4.2 mm, 4.4 mm, 4.6 mm, 4.8 mm, 5 mm, 5.2 mm, 5.4 mm, 5.6 mm, 5.8 mm, and 6 mm, or a range composed of any two of these values. It should be noted that the specific values of the length H₂ mm mentioned above are merely exemplarily given, and any value within the range of 4 mm - 6 mm falls within the protection scope of the present application.

The length H₂ of the positive electrode tab 123 in the first direction Z can be directly measured when the positive electrode sheet 120 is in a wound state, or can be measured when the positive electrode sheet 120 is unfolded from the wound state to a flat state. Optionally, in the present application, the length H₂ of the positive electrode tab 123 in the first direction Z is determined by: disassembling firstly the battery cell, unfolding the positive electrode sheet 120 from the wound state to a flat state, measuring the length of the positive electrode tab 123 in the first direction Z at different positions for multiple times using a measuring tool, and calculating an average value. The measuring tool can be either a straightedge or a vernier caliper.

It can be understood that in the present application, by controlling the length H₂ mm of the positive electrode tab 123 in the first direction Z to be within the range of 4 mm - 6 mm, the height of the positive electrode tab is minimized while ensuring the flattened surface of the tab after flattening, thereby reducing the stacking height of the positive electrode tab and increasing the height of the portion of the positive electrode sheet having the positive electrode active material layer. This enhances the cycle life of the battery cell while improving the energy density thereof, thereby improving the comprehensive performance of the battery cell.

In one embodiment, a thickness T₁ mm of the separator 130 satisfies: 0.006 ≤ T₁ ≤ 0.02. That is, the thickness T₁ mm of the separator 130 can be controlled within a range of 0.006 mm - 0.02 mm. For example, the thickness T₁ mm of the separator 130 may be one of 0.006 mm, 0.008 mm, 0.01 mm, 0.012 mm, 0.014 mm, 0.016 mm, 0.018 mm, and 0.02 mm, or a range composed of any two of these values. It should be noted that the specific values of the thickness T₁ mm mentioned above are merely exemplarily given, and any value within the range of 0.006 mm - 0.02 mm falls within the protection scope of the present application.

In some embodiments, the thickness T₁ mm of the separator 130 satisfies: 0.009 ≤ T₁ ≤ 0.015. That is, the thickness T₁ mm of the separator 130 can be controlled within a range of 0.009 mm - 0.015 mm. For example, the thickness T₁ mm of the separator 130 may be one of 0.009 mm, 0.01 mm, 0.011 mm, 0.012 mm, 0.013 mm, 0.014 mm, and 0.015 mm, or a range composed of any two of these values. It should be noted that the specific values of the thickness T₁ mentioned above are merely exemplarily given, and any value within the range of 0.009 mm - 0.015 mm falls within the protection scope of the present application.

The thickness T₁ mm of the separator 130 can be determined by unfolding the separator 130 into a flat state, then measuring the thickness of the separator 130 at different positions for multiple times using a measuring tool, and calculating an average value. The measuring tool can be either a thickness-measuring gauge or a micrometer. It can be understood that in the present application, by controlling the thickness T₁ mm of the separator 130 within the range of 0.009 mm - 0.015 mm, the thickness of the separator 130 is controlled within a reasonable range, and the height of the positive electrode tab and the height of the negative electrode tab are minimized while ensuring the flattened surface of the tab after flattening in different battery cells, thereby reducing the stacking height of the positive electrode tab and the stacking height of the negative electrode tab, and increasing the height of the portion of the positive electrode sheet having the positive electrode active material layer and the height of the portion of the negative electrode sheet having the negative electrode active material layer. This enhances the cycle life of the battery cell while improving the energy density thereof, thereby improving the comprehensive performance of the battery cell.

In one embodiment, the number of separator-only winding turns n of the separator 130 satisfies: 0 < n ≤ 20. That is, the number of separator-only winding turns of the separator 130 can be controlled within a range of 0 - 20 turns. For example, the number of separator-only winding turns of the separator 130 can be one of 1 turn, 2 turns, 4 turns, 6 turns, 8 turns, 10 turns, 12 turns, 14 turns, 16 turns, 18 turns, and 20 turns, or a range composed of any two of these values. It should be noted that the specific values of the number of separator-only winding turns n mentioned above are merely exemplarily given, and any value within the range of 0- 20 turns falls within the protection scope of the present application.

In a preferred embodiment, the number of separator-only winding turns n of the separator 130 satisfies: 5 ≤ n ≤ 10. That is, the number of separator-only winding turns of the separator 130 can be controlled within a range of 5 turns - 10 turns. For example, the number of separator-only winding turns of the separator 130 may be one of 5 turns, 6 turns, 7 turns, 8 turns, 9 turns, and 10 turns, or a range composed of any two of these values. It should be noted that the specific values of the number of separator-only winding turns n mentioned above are merely exemplarily given, and any value within the range of 5 turns - 10 turns falls within the protection scope of the present application.

It can be understood that in the present application, by controlling the number of separator-only winding turns n of the separator 130 within the range of 5 turns to 10 turns, the number of separator-only winding turns n of the separator 130 is controlled within a reasonably range, and the height of the positive electrode tab and the height of the negative electrode tab are minimized while ensuring the flattened surface of the tab after flattening in different battery cells, thereby reducing the stacking height of the positive electrode tab and the stacking height of the negative electrode tab, and increasing the height of the portion of the positive electrode sheet having the positive electrode active material layer and the height of the portion of the negative electrode sheet having the negative electrode active material layer. This enhances the cycle life of the battery cell while improving the energy density thereof, thereby improving the comprehensive performance of the battery cell.

Optionally, a material of the separator 130 mentioned above includes, but is not limited to, any one of PP material, PE material, or PP/PE composite material.

A surface of the separator 130 mentioned above may be provided with an adhesive layer, which includes, but is not limited to, a PVDF layer.

The surface of the separator 130 mentioned above may be further provided with a safety coating, a material of which includes, but is not limited to, boehmite, or aluminum oxide. The aforementioned materials can be used alone or in a combination.

In one embodiment, a total thickness T₂ mm of the negative electrode substrate 111 and the negative electrode active material layer 112 satisfies: 0.05 ≤ T₂ ≤ 0.5. That is, the total thickness T₂ mm of the negative electrode substrate 111 and the negative electrode active material layer 112 can be controlled within a range of 0.05 mm - 0.5 mm. For example, the total thickness T₂ mm of the negative electrode substrate 111 and the negative electrode active material layer 112 may be one of 0.05 mm, 0.1 mm, 0.15 mm, 0.2 mm, 0.25 mm, 0.3 mm, 0.35 mm, 0.4 mm, 0.45 mm, and 0.5 mm, or a range composed of any two of these values. It should be noted that the specific values of the T₂ mm mentioned above are merely exemplarily given, and any value within the range of 0.05 mm - 0.5mm falls within the protection scope of the present application.

In one embodiment, the total thickness T₂ mm of the negative electrode substrate 111 and the negative electrode active material layer 112 satisfies: 0.1 ≤ T₂ ≤ 0.2. That is, the total thickness T₂ mm of the negative electrode substrate 111 and the negative electrode active material layer 112 can be controlled within a range of 0.1 mm - 0.2 mm. For example, the total thickness T₂ mm of the negative electrode substrate 111 and the negative electrode active material layer 112 may be one of 0.1 mm, 0.11 mm, 0.12 mm, 0.13 mm, 0.14 mm, 0.15 mm, 0.16 mm, 0.17 mm, 0.18 mm, 0.19 mm, and 0.2 mm, or a range composed of any two of these values. It should be noted that the specific values of the T₂ mm mentioned above are merely exemplarily given, and any value within the range of 0.1 mm - 0.2 mm falls within the protection scope of the present application.

The total thickness T₂ mm of the negative electrode substrate 111 and the negative electrode active material layer 112 can be determined by: flattening firstly the negative electrode sheet 110 into a flat state, then measuring the total thickness of the negative electrode substrate 111 and the negative electrode active material layer 112 at different positions of the negative electrode sheet 110 for multiple times using a measuring tool, and calculating an average value. The measuring tool can be either a thickness-measuring gauge or a micrometer.

It can be understood that in the present application, by controlling the total thickness T₂ mm of the negative electrode substrate 111 and the negative electrode active material layer 112 within the range of 0.1 mm - 0.2 mm, the total thickness T₂ mm of the negative electrode substrate 111 and the negative electrode active material layer 112 is controlled within a reasonable range, and the height of the positive electrode tab and the height of the negative electrode tab are minimized while ensuring the flattened surface of the tab after flattening in different battery cells, thereby reducing the stacking height of the positive electrode tab and the stacking height of the negative electrode tab, and increasing the height of the portion of the positive electrode sheet having the positive electrode active material layer and the height of the portion of the negative electrode sheet having the negative electrode active material layer. This enhances the cycle life of the battery cell while improving the energy density thereof, thereby improving the comprehensive performance of the battery cell.

In the embodiments of the present application, a thickness T₃ mm of the negative electrode substrate 111 satisfies: 0.002 ≤ T ≤ 0.02. That is, the thickness T₃ mm of the negative electrode substrate 111 can be controlled within a range of 0.002 mm - 0.02 mm. For example, the thickness T₃ mm of the negative electrode substrate 111 can be one of 0.002 mm, 0.006 mm, 0.01 mm, 0.011 mm, 0.016 mm, 0.018 mm, and 0.02 mm, or a range composed of any two of these values. It should be noted that the specific values of the thickness T₃ mm mentioned above are merely exemplarily given, and any value within the range of 0.002 mm - 0.02 mm falls within the protection scope of the present application.

In one embodiment, the thickness T₃ mm of the negative electrode substrate 111 satisfies: 0.0045 ≤ T₃ ≤ 0.008. That is, the thickness T₃ mm of the negative electrode substrate 111 can be controlled within a range of 0.0045 mm - 0.008 mm. For example, the thickness T₃ mm of the negative electrode substrate 111 can be one of 0.0045 mm, 0.005 mm, 0.0055 mm, 0.006 mm, 0.0065 mm, 0.007 mm, 0.0075 mm, and 0.008 mm, or a range composed of any two of these values. It should be noted that the specific values of the thickness T₃ mm mentioned above are merely exemplarily given, and any value within the range of 0.0045 mm - 0.008 mm falls within the protection scope of the present application.

The thickness T₃ mm of the negative electrode substrate 111 can be determined by: flattening firstly the negative electrode sheet 110, then removing the negative electrode active material layer 112 from the surface of the negative electrode sheet 110 to leave only the negative electrode substrate 111; measuring the thickness of the negative electrode substrate 111 at different positions for multiple times using a measuring tool, and calculating an average value. The measuring tool can be either a thickness-measuring gauge or a micrometer.

It can be understood that in the present application, by controlling the thickness T₃ mm of the negative electrode substrate 111 within the range of 0.0045 mm - 0.008 mm, the thickness of the negative electrode substrate 111 is controlled within a reasonable range, and the height of the negative electrode tab is minimized while ensuring the flattened surface of the tab after flattening in different battery cells, thereby reducing the stacking height of the negative electrode tab and increasing the height of the portion of the negative electrode sheet having the negative electrode active material layer. This enhances the cycle life of the battery cell while improving the energy density thereof, thereby improving the comprehensive performance of the battery cell.

Optionally, in one embodiment, the negative electrode substrate 111 includes, but is not limited to, metal foil, metal cylinder, metal tape roll, metal plate, metal film, metal plate mesh, stamped metal, foamed metal, etc. In one embodiment, the negative electrode substrate 111 is a metal foil. In one embodiment, the negative electrode substrate 111 is a copper foil. As used herein, the term "copper foil" includes a copper alloy foil.

The negative electrode active material layer 112 may be a single layer or multiple layers, and each layer of the multiple layers of the negative electrode active material may contain the same or different negative electrode active materials. In the embodiments of the present application, a rechargeable capacity of the negative electrode active material is greater than a discharge capacity of the positive electrode active material, to prevent lithium metal precipitation on the negative electrode sheet during charging.

The negative electrode active material layer 112 includes, but is not limited to, artificial graphite, natural graphite, soft carbon, hard carbon, amorphous carbon, carbon fiber, carbon nanotubes, and meso-carbon micro-beads. The above negative electrode active materials can be used alone or in any combination.

The negative electrode sheet 110 in the battery cell 100 of the present application can be prepared by any known method. For example, a conductive agent, a binder, an additive agent, and a solvent are added to the negative electrode active material to form a slurry, and the slurry is coated onto the negative electrode substrate, dried, and then pressed to form the electrode.

In one embodiment, a total thickness T₄ mm of the positive electrode substrate 121 and the positive electrode active material layer 122 satisfies: 0.05 ≤ T₄ ≤ 0.5. That is, the total thickness T₄ mm of the positive electrode substrate 121 and the positive electrode active material layer 122 can be controlled within a range of 0.05 mm - 0.5 mm. For example, the total thickness T₄ mm of the positive electrode substrate 121 and the positive electrode active material layer 122 may be one of 0.05 mm, 0.1 mm, 0.15 mm, 0.2 mm, 0.25 mm, 0.3 mm, 0.35 mm, 0.4 mm, 0.45 mm, and 0.5 mm, or a range composed of any two of these values. It should be noted that the specific values of the total thickness T₄ mm mentioned above are merely exemplarily given, and any value within the range of 0.05 mm - 0.5 mm falls within the protection scope of the present application.

In one embodiment, the total thickness T₄ mm of the positive electrode substrate 121 and the positive electrode active material layer 122 satisfies: 0.1 ≤ T₄ ≤ 0.2. That is, the total thickness T₄ mm of the positive electrode substrate 121 and the positive electrode active material layer 122 can be controlled within a range of 0.1 mm - 0.2 mm. For example, the total thickness T₄ mm of the positive electrode substrate 121 and the positive electrode active material layer 122 can be one of 0.1 mm, 0.11 mm, 0.12 mm, 0.13 mm, 0.214 mm, 0.15 mm, 0.16 mm, 0.17 mm, 0.18 mm, 0.19 mm, and 0.2 mm, or a range composed of any two of these values. It should be noted that the specific values of the total thickness T₄ mm mentioned above are merely exemplarily given, and any value within the range of 0.1 mm - 0.2 mm falls within the protection scope of the present application.

The total thickness T₄ mm of the positive electrode substrate 121 and the positive electrode active material layer 122 can be determined by: flattening firstly the positive electrode sheet 120 into a flat state, then measuring the total thickness of the positive electrode substrate 121 and the positive electrode active material layer 122 at different positions of the positive electrode sheet 120 for multiple times using a measuring tool, and calculating an average value. The measuring tool can be either a thickness-measuring gauge or a micrometer.

It can be understood that in the present application, by controlling the total thickness T₄ mm of the positive electrode substrate 121 and the positive electrode active material layer 122 within the range of 0.1 mm - 0.2 mm, the total thickness T₄ mm of the positive electrode substrate 121 and the positive electrode active material layer 122 is controlled within a reasonable range, and the height of the positive electrode tab is minimized while ensuring the flattened surface of the tab after flattening in different battery cells, thereby reducing the stacking height of the positive electrode tab and increasing the height of the portion of the positive electrode sheet having the positive electrode active material layer. This enhances the cycle life of the battery cell while improving the energy density thereof, thereby improving the comprehensive performance of the battery cell.

In one embodiment, a thickness Ts mm of the positive electrode substrate 121 satisfies: 0.002 ≤ T₅ ≤ 0.03. That is, the thickness T₅ mm of the positive electrode substrate 121 can be controlled within a range of 0.002 mm - 0.03 mm. For example, the thickness T₅ mm of the positive electrode substrate 121 can be one of 0.002 mm, 0.006 mm, 0.01 mm, 0.014 mm, 0.018 mm, 0.022 mm, 0.026 mm, and 0.03 mm, or a range composed of any two of these values. It should be noted that the specific values of the thickness T₅ mm mentioned above are merely exemplarily given, and any value within the range of 0.002 mm- 0.03 mm falls within the protection scope of the present application.

Preferably, the thickness T₅ mm of the positive electrode substrate 121 satisfies: 0.01 ≤ T₅ ≤ 0.015. That is, the thickness T₅ mm of the positive electrode substrate 121 can be controlled within a range of 0.01mm to 0.015mm. For example, the thickness T₅ mm of the positive electrode substrate 121 may be one of 0.01 mm, 0.011 mm, 0.012 mm, 0.013 mm, 0.014 mm, and 0.015 mm, or a range composed of any two of these values. It should be noted that the specific values of the thickness T₅ mm mentioned above are merely exemplarily given, and any value within the range of 0.002 mm - 0.03 mm falls within the protection scope of the present application.

The thickness T₅ mm of the positive electrode substrate 121 can be determined by: flattening firstly the positive electrode sheet 120 into a flat state, then removing all of the positive electrode active material layer 122 on the surface of the positive electrode sheet 120 to leave only the positive electrode substrate 121, measuring the thickness of the positive electrode substrate 121 at different positions for multiple times using a measuring tool, and calculating an average value. The measuring tool can be either a thickness-measuring gauge or a micrometer.

It can be understood that in the present application, by controlling the thickness T₅ mm of the positive electrode substrate 121 within the range of 0.01 mm - 0.015 mm, the thickness of the positive electrode substrate 121 is controlled within a reasonable range. Thus, the height of the positive electrode tab is minimized while ensuring the flattened surface of the tab after flattening in different battery cells, thereby reducing the stacking height of the positive electrode tab and increasing the height of the portion of the positive electrode sheet having the positive electrode active material layer. This enhances the cycle life of the battery cell while improving the energy density thereof, thereby improving the comprehensive performance of the battery cell.

In one embodiment, the positive electrode active material layer 122 mentioned above may be a single layer or multiple layers, and each layer of the multiple layers of the positive electrode active material may contain the same or different positive electrode active materials. The positive electrode active material is any substance that can provide reversibly intercalation and deintercalation of metal ions such as lithium ions.

The positive electrode active material layer 122 includes, but is not limited to, a positive electrode active material; and the positive electrode active material includes, but is not limited to, lithium cobalt oxide, lithium manganese oxide, lithium iron phosphate (LFP), and a ternary material. The ternary material includes, but is not limited to, lithium nickel cobalt manganese oxide and lithium nickel cobalt aluminum oxide.

The positive electrode active material may further include a doping element, which can include aluminum, magnesium, titanium, zirconium, strontium, and other elements, as long as it can enhance the structural stability of the positive electrode active material.

The positive electrode active material may further include a coating element, which can include aluminum, magnesium, titanium, zirconium, fluorine, boron and other elements, as long as it can enhance the structural stability of the positive electrode active material.

Optionally, the type of the positive electrode substrate 121 is not particularly limited in the present application and may be any known material suitable for use as the positive electrode substrate 121, as long as it does not damage the effects of the present application.

Specifically, in one embodiment, the positive electrode substrate 121 may include, but is not limited to, metal material such as aluminum, stainless steel, nickel-plating layer, titanium, and tantalum; and carbon material such as carbon cloth and carbon paper. In one embodiment, the positive electrode substrate 121 is metal material. In one embodiment, the positive electrode current collector is an aluminum foil.

In one embodiment, the positive electrode sheet 120 further includes a positive electrode conductive agent and a positive electrode binder. The types of the positive electrode conductive agent and the positive electrode binder are not limited in the present application, and any known material can be used as long as it does not damage the effects of the present application.

Specifically, the positive electrode conductive agent may include, but is not limited to, graphite such as natural graphite and artificial graphite; carbon black such as acetylene black; carbon material such as amorphous carbon including needle coke; carbon nanotubes; and graphene. The positive electrode conductive materials mentioned above can be used alone or in any combination.

The positive electrode binder includes, but is not limited to, polyethylene, polypropylene, polyethylene terephthalate, polymethyl methacrylate, polyimide, aromatic polyamide, cellulose, and nitrocellulose. The positive electrode conductive materials mentioned above can be used alone or in any combination.

The positive electrode sheet 120 in the battery cell 100 of the present application can be prepared by any known method. For example, a conductive agent, a binder, a solvent and so on are added to the positive electrode active material to form a slurry, and the slurry is coated onto the positive electrode substrate, dried, and then pressed to form an electrode. The negative electrode active material may also be roll-formed into a sheet electrode or compression-molded into a particulate electrode.

In one embodiment, when the electrode sheet is unfolded, the electrode sheet has a second direction X intersecting with the first direction Z. Specifically, when the electrode sheet is unfolded, the electrode sheet has a second direction X that intersects with the first direction Z and the third direction Y. A dimension of the tab in the second direction X is L mm, satisfying: 1 ≤ L ≤ 10.

In one embodiment, when the electrode sheet is unfolded, the electrode sheet has a second direction X intersecting with the first direction Z. Specifically, when the electrode sheet is unfolded, the electrode sheet has a second direction X that intersects with the first direction Z and the third direction Y. A dimension of the tab in the second direction X is L mm, satisfying: 3 ≤ L ≤ 5.

Specifically, the electrode sheet can be either a positive electrode sheet or a negative electrode sheet. When the electrode sheet is a positive electrode sheet, the corresponding tab is a positive electrode tab; and when the electrode sheet is a negative electrode sheet, the corresponding tab is a negative electrode tab.

Referring to FIG. 2, when the positive electrode sheet is unfolded and the corresponding tab is the positive electrode tab 123, the dimension of the positive electrode tab 123 in the second direction X is L₁ mm, satisfying: 1 ≤ L₁ ≤ 10. That is, the dimension L₁ mm of the positive electrode tab 123 in the second direction X can be controlled within a range of 1 mm - 10 mm. For example, the dimension L₁ mm of the positive electrode tab 123 in the second direction X can be one of 1 mm, 2 mm, 3 mm, 4 mm, 5 mm, 6 mm, 8 mm, 9 mm, and 10 mm, or a range composed of any two of these values. It should be noted that the specific values of the dimension L₁ mm mentioned above are merely exemplarily given, and any value within the range of 1 mm - 10 mm falls within the protection scope of the present application.

In one embodiment, the dimension of the positive electrode tab 123 in the second direction X is L₁ mm, satisfying: 3 ≤ L₁ ≤ 5. That is, the dimension L₁ mm of the positive electrode tab 123 in the second direction X can be controlled within a range of 3 mm - 5 mm. For example, the dimension L₁ mm of the positive electrode tab 123 in the second direction X can be one of 3 mm, 3.5 mm, 4 mm, 4.5 mm, and 5 mm, or a range composed of any two of these values. It should be noted that the specific values of the dimension L₁ mm mentioned above are merely exemplarily given, and any value within the range of 3 mm - 5 mm falls within the protection scope of the present application.

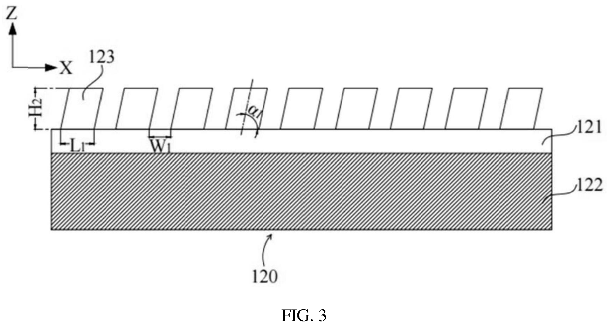

Referring to FIG. 3, when the negative electrode sheet is unfolded and the corresponding tab is the negative electrode tab 113, the dimension of the negative electrode tab 113 in the second direction X is L₂ mm, satisfying: 1 ≤ L₂ ≤ 10. That is, the dimension L₂ mm of the negative electrode tab 113 in the second direction X can be controlled within a range of 1 mm - 10 mm. For example, the length L₂ mm of the negative electrode tab 113 in the second direction X can be one of 1 mm, 2 mm, 3 mm, 4 mm, 5 mm, 6 mm, 8 mm, 9 mm, and 10 mm, or a range composed of any two of these values. It should be noted that the specific values of the dimension L₂ mm mentioned above are merely exemplarily given, and any value within the range of 1 mm - 10 mm falls within the protection scope of the present application.

In one embodiment, the dimension L₂ mm of the negative electrode tab 113 in the second direction X is L₂ mm, satisfying: 3 ≤ L₂ ≤ 5. That is, the dimension L₂ mm of the negative electrode tab 113 in the second direction X can be controlled within a range of 3 mm - 5 mm. For example, the dimension L₂ mm of the negative electrode tab 113 in the second direction X can be one of 3 mm, 3.5 mm, 4 mm, 4.5 mm, and 5 mm, or a range composed of any two of these values. It should be noted that the specific values of the dimension L₂ mm mentioned above are merely exemplarily given, and any value within the range of 3 mm - 5 mm falls within the protection scope of the present application.

The dimension L₁ mm of the positive electrode tab 123 in the second direction X and the dimension L₂ mm of the negative electrode tab 113 in the second direction X can be the same or different, which is not specifically limited in the present application, as long as it does not affect the effects of the present application. Optionally, the dimension L₁ mm of the positive electrode tab 123 in the second direction X is the same as the dimension L₂ mm of the negative electrode tab 113 in the second direction X.

The dimension L₁ mm of the positive electrode tab 123 in the second direction X can be determined by: flattening firstly the positive electrode sheet 120 into a flat state, then measuring the length of the positive electrode tab 123 on the positive electrode sheet 120 in the second direction X for multiple times using a measuring tool, and calculating an average value. The measuring tool can be either a straightedge or a vernier caliper.

The dimension L₂ mm of the negative electrode tab 113 in the second direction X can be determined by: flattening firstly the negative electrode sheet 110 into a flat state, then measuring the length of the negative electrode tab 113 on the negative electrode sheet 110 in the second direction X for multiple times using a measuring tool, and calculating an average value. The measuring tool can be either a straightedge or a vernier caliper.

It can be understood that in the present application, by controlling the dimensions of the positive electrode tab and the negative electrode tab in the second direction X within the range of 3 mm - 5 mm, the winding manufacturability of the positive and negative electrode sheets is enhanced, improving the winding qualification rate. Additionally, it reduces the welding difficulty between the current collector disk and the tabs in the battery cell, thereby increasing the welding qualification rate.

In one embodiment, when the electrode sheet is unfolded, a distance between adjacent electrode tabs in the second direction X is W mm, satisfying: 0 < W ≤ 5.

In one embodiment, when the electrode sheet is unfolded, a distance between adjacent electrode tabs in the second direction X is W mm, satisfying: 0 < W ≤ 2.

Specifically, referring to FIG. 2, when the positive electrode sheet is unfolded and the corresponding tab is the positive electrode tab 123, a distance between two adjacent positive electrode tabs 123 in the second direction X is W₁ mm, satisfying: 0 < W₁ ≤ 5. That is, the distance W₁ mm between two adjacent positive electrode tabs 123 can be controlled within a range of 0 mm - 5 mm. For example, the distance W₁ mm between two adjacent positive electrode tabs 123 can be one of 1 mm, 2 mm, 3 mm, 4 mm, and 5 mm, or a range composed of any two of these values. It should be noted that the specific values of the distance W₁ mm mentioned above are merely exemplarily given, and any value within the range of 0 mm - 5 mm falls within the protection scope of the present application.

In one embodiment, when the positive electrode sheet 120 is unfolded, the distance between two adjacent positive electrode tabs 123 in the second direction X is W₁ mm, satisfying: 0 < W₁ ≤ 2. That is, the distance W₁ mm between two adjacent positive electrode tabs 123 can be controlled within a range of 0 mm - 2 mm. For example, the distance W₁ mm between two adjacent positive electrode tabs 123 can be one of 0.5 mm, 1 mm, 1.5 mm, and 2 mm, or a range composed by any two of these values. It should be noted that the specific values of the distance W₁ mm mentioned above are merely exemplarily given, and any value within the range of 0 mm - 2 mm falls within the protection scope of the present application.

Referring to FIG. 3, when the tab is the negative electrode tab 113, and when the negative electrode sheet 110 is unfolded, a distance between two adjacent negative electrode tabs 113 in the second direction X is W₂ mm, satisfying: 0 < W₂ ≤ 5. That is, the distance W₂ mm between two adjacent negative electrode tabs 113 can be controlled within a range of 0 mm - 5 mm. For example, the distance W₂ mm between two adjacent negative electrode tabs 113 can be one of 1 mm, 2 mm, 3 mm, 4 mm, and 5 mm, or a range composed of any two of these values. It should be noted that the specific values of the distance W₂ mm mentioned above are merely exemplarily given, and any value within the range of 0 mm - 5 mm falls within the protection scope of the present application. in a flat state, the distance between two adjacent negative electrode tabs 113 in the second direction X is W₂ mm, satisfying: 0 < W₂ ≤ 2. That is, the distance W₂ mm between two adjacent negative electrode tabs 113 can be controlled within a range of 0 mm - 2 mm. For example, the distance W₂ mm between two adjacent negative electrode tabs 113 can be one of 0.5 mm, 1 mm, 1.5 mm, and 2 mm, or a range composed by any two of these values. It should be noted that the specific values of the distance W₂ mm mentioned above are merely exemplarily given, and any value within the range of 0 mm - 2 mm falls within the protection scope of the present application.

The distance W₁ mm between two adjacent positive electrode tabs 123 and the distance W₂ mm between two adjacent negative electrode tabs 113 can be the same or different, which is not specifically limited in the present application, as long as it does not affect the effects of the present application. Preferably, the distance W₁ mm between two adjacent positive electrode tabs 123 is the same as the distance W₂ mm between two adjacent negative electrode tabs 113 in the present application.

The distance W₁ mm between two adjacent positive electrode tabs 123 can be determined by: flattening firstly the positive electrode sheet 120 into a flat state, then measuring the distance between adjacent positive electrode tabs 123 at different positions of the positive electrode sheet for multiple times using a measuring tool, and calculating an average value. The measuring tool can be either a straightedge or a vernier caliper.

The distance W₂ mm between two adjacent negative electrode tabs 113 can be determined by: disassembling firstly the battery cell, unfolding the negative electrode sheet 110, flattening the unfolded negative electrode sheet 110 into a flat state, measuring the distance between adjacent negative electrode tabs 113 at different positions of the negative electrode sheet, and then calculating an average value. The measuring tool can be either a straightedge or a vernier caliper.

It can be understood that in the present application, by controlling the distance between two adjacent positive electrode tabs 123 and the distance between two adjacent negative electrode tabs 113 within the range of 0 mm - 2 mm, the winding manufacturability of the positive and negative electrode sheets is enhanced, improving the winding qualification rate. Additionally, it reduces the welding difficulty between the current collector disk and the tabs in the battery cell, thereby increasing the welding qualification rate.

In one embodiment, an angle between an axis of the tab and the second direction X is α, satisfying: 0° < α ≤ 90°. In one embodiment, the angle α between the axis of the tab and the second direction X satisfies: 30° ≤ α ≤ 60°.

The tab can be either the positive electrode tab 123 or the negative electrode tab 113.

Specifically, referring to FIG. 2, when the tab is the positive electrode tab 123, the angle between the axis of the positive electrode tab 123 and the second direction X is α₁, satisfying: 0 < α₁ ≤ 90°. That is, the angle α₁ between the axis of the positive electrode tab 123 and the second direction X can be controlled within a range of 0-90°. For example, the angle α₁ between the axis of the positive electrode tab 123 and the second direction X may be one of 10°, 20°, 30°, 40°, 50°, 60°, 70°, 80°, and 90°, or a range composed of any two of these values. It should be noted that the specific values of the angle α₁ mentioned above are merely exemplarily given, and any value within the range of 0°-90° falls within the protection scope of the present application.

In one embodiment, the angle α₁ between the axis of the positive electrode tab 123 and the second direction X satisfies: 30° ≤ α₁ ≤ 60°. That is, the angle α₁ between the axis of the positive electrode tab 123 and the second direction X can be controlled within a range of 30°-60°. For example, the angle α₁ between the axis of the positive electrode tab 123 and the second direction X can be one of 30°, 35°, 40°, 45°, 50°, 55°, and 60°, or a range composed of any two of these values. It should be noted that the specific values of the angle α₁ mentioned above are merely exemplarily given, and any value within the range of 30°-60° falls within the protection scope of the present application.

Referring to FIG. 3, when the tab is the negative electrode tab 113, an angle between an axis of the negative electrode tab 113 and the second direction X is α₂ , satisfying: 0 < α₂ ≤ 90°. That is, the angle α₂ between the axis of the negative electrode tab 113 and the second direction X can be controlled within a range of 0-90°. For example, the angle α₂ between the axis of the negative electrode tab 113 and the second direction X can be one of 10°, 20°, 30°, 40°, 50°, 60°, 70°, 80°, and 90°, or a range composed by any two of these values. It should be noted that the specific values of the angle α₂ mentioned above are merely exemplarily given, and any value within the range of 0°-90° falls within the protection scope of the present application.

In one embodiment, the angle α₂ between the axis of the negative electrode tab 113 and the second direction X satisfies: 30° ≤ α₂ ≤ 60°. That is, the angle α₂ between the axis of the negative electrode tab 113 and the second direction X can be controlled within the range of 30°-60°. For example, the angle α₂ between the axis of the negative electrode tab 113 and the second direction X can be one of 30°, 35°, 40°, 45°, 50°, 55°, and 60°, or a range composed of any two of these values. It should be noted that the specific values of the angle α₂ mentioned above are merely exemplarily given, and any value within the range of 30°-60° falls within the protection scope of the present application.

The angle α₁ between the axis of the positive electrode tab 123 and the second direction X can be the same as or different from the angle α₂ between the axis of the negative electrode tab 113 and the second direction X, which is not specifically limited in the present application, as long as it does not affect the effects of the present application. In some embodiments, the angle α₁ between the axis of the positive electrode tab 123 and the second direction X is equal to the angle α₂ between the axis of the negative electrode tab 113 and the second direction X.

Referring to FIG. 3, when the positive electrode sheet 120 is unfolded, the axis of the positive electrode tab 123 refers to a central axis of the positive electrode tab 123 that is disposed along its extension direction.

Referring to FIG. 2, when the negative electrode sheet 110 is unfolded, the axis of the negative electrode tab 113 refers to a central axis of the negative electrode tab 113 that is disposed along its extension direction.

The central axis of the positive electrode tab 123 can be determined by: unfolding firstly the positive electrode sheet and the positive electrode tab, flattening the unfolded positive electrode sheet into a flat state, and then identifying the central axis of the positive electrode tab that is provided along is extension direction as the axis of the positive electrode tab. Similarly, the central axis of the negative electrode tab 113 can be determined by: disassembling the battery cell, unfolding the negative electrode sheet, flattening the unfolded negative electrode sheet into a flat state, and then identifying the central axis of the negative electrode tab that is provided along its extension direction as the axis of the negative electrode tab.

The angle α₁ between the axis of the positive electrode tab 123 and the second direction X can be determined by: disassembling firstly the battery cell, unfolding the positive electrode sheet 120, flattening the unfolded positive electrode sheet 120 into a flat state, then measuring the angle between the axis of the positive electrode tab 123 on the positive electrode sheet and the second direction X for multiple times using a measuring tool, and calculating an average value. The measuring tool can be an angle measuring instrument.

The angle α₂ between the axis of the negative electrode tab 113 and the second direction X can be determined by: unfolding firstly the negative electrode sheet 110, flattening the unfolded negative electrode sheet 110 into a flat state, then measuring the angle between the axis of the negative electrode tab 113 on the negative electrode sheet and the second direction X for multiple times using a measuring tool, and calculating an average value. The measuring tool can be an angle measuring instrument.

It can be understood that in the present application, by controlling the angle between the axis of the negative electrode tab 113 and the second direction X and the angle between the axis of the positive electrode tab 123 and the second direction X within the range of 30°-60°, the winding manufacturability is enhanced, and the winding qualification rate is improved. Additionally, the flattened surface of the tabs after flattening is further optimized, thereby increasing the welding qualification rate between the end surface of the tab and the current collector plate in subsequent processes, and improving the welding effectiveness between the tab and the current collector plate.

In a preferred embodiment of the present application, the battery cell 100 further includes an electrolyte solution, which is accommodated within the housing and infiltrates the electrode assembly. The electrolyte solution used in the battery cell 100 of the present application includes an electrolyte and a solvent that dissolves the electrolyte.

In some embodiments of the present application, the battery cell 100 is a cylindrical battery cell.

The electrolyte is not particularly limited in the present application, and any known substance commonly used as an electrolyte can be used, as long as it does not damage the effects of the present application. In the case of a secondary battery, lithium salts are commonly used. In one embodiment, the electrolyte includes, but is not limited to, LiPF₆.

Meanwhile, a content of the electrolyte is not particularly limited in the present application, as long as it does not damage the effects of the present application. For example, the content of the electrolyte can be within a range of 0.8 mol/L to 2.2 mol/L.

The solvent is not particularly limited in the present application, and any known substance commonly used as a solvent can be used, as long as it does not damage the effects of the present application.

In one embodiment, the solvent includes, but is not limited to, ethylene carbonate (EC), propylene carbonate (PC), diethyl carbonate (DEC), ethyl methyl carbonate (EMC), dimethyl carbonate (DMC), butylene carbonate (BC), and methyl ethylene carbonate (MEC). The above solvents can be used alone or in any combination.

On the other hand, in the embodiments of the present application, the present application further provides a battery module, including: an accommodating box and the battery cell according to any one of the above, where the battery cell is accommodated within the accommodating box in the battery module.

Specifically, the battery module can be a battery module group or a battery pack.

On the other hand, in the embodiments of the present application, the present application further provides an electrical device including the battery module mentioned above. The battery module serves as the power supply for the electrical device. The electrical device may include, but is not limited to, a mobile device (e.g., a phone, a laptop, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, and an energy storage system, etc.

A preparation method for a lithium-ion battery will be illustrated hereinafter taking a lithium-ion battery as an example and with reference to specific examples. Those skilled in the art will understand that the preparation method described in the present application is merely exemplary, and any other suitable preparation methods fall within the scope of the present application.

The following description provides a performance evaluation based on the Examples and Comparative examples of the lithium-ion batteries in the present application.

### Example 1

This example provides a preparation method for a lithium-ion battery, which has the specific process as follows.

### 1. Preparation of a positive electrode sheet

Lithium iron phosphate as a positive electrode active material, conductive carbon black SP as a conductive agent, and PVDF as a binder were mixed in a mass ratio of 97:0.7:2.3, and then NMP as a solvent was added for blending, followed by stirring for a certain period to obtain a uniform positive electrode slurry with certain fluidity. The positive electrode slurry was coated evenly onto both sides of a carbon-coated aluminum foil as a positive electrode current collector, and then the resulting aluminum foil was transferred to a 120°C oven for drying, and then subjected to rolling, slitting, and cutting to obtain the positive electrode sheet.

### 2. Preparation of a negative electrode sheet

Graphite as a negative electrode active material, conductive carbon black SP as a conductive agent, CMC as a thickener, and SBR as a binder are mixed in a mass ratio of 96.5:0.5:1.2:1.8, and then deionized water as a solvent is added for blending, followed by stirring for a certain period to obtain a uniform negative electrode slurry with certain fluidity. The negative electrode slurry is coated evenly onto both sides of a copper foil as a negative electrode current collector, and then the resulting copper foil is transferred to a 110°C oven for drying, and then subjected to rolling, slitting, and cutting to obtain the negative electrode sheet.

### 3. Preparation of electrolyte solution

Ethylene carbonate (EC), ethyl methyl carbonate (EMC), and diethyl carbonate (DEC) are mixed in a volume ratio of 1:1:1, and then 1 mol/L LiPF₆ is added and mixed uniformly, followed by adding 1% vinylene carbonate to prepare the electrolyte solution.

### 4. Preparation of a separator

A PP film is used as the separator.

### 5. Preparation of a lithium-ion battery

The negative electrode sheet and the positive electrode sheet prepared using the above steps are dried, and wound together with the separator using a winding machine to form a wound electrode assembly; and the positive electrode tab and the negative electrode tab are welded onto a top cover of the electrode assembly, then the electrode assembly with the welded top cover is placed into an aluminum casing for sealing, followed by injecting the electrolyte solution and performing formation and capacity calibration to obtain the lithium-ion battery.

The thickness T₁ mm of the separator 130 is 0.02 mm, the number of separator-only winding turns n of the separator 130 is 20 turns, the total thickness T₂ mm of the negative electrode substrate 111 and the negative electrode active material layer 112 is 0.16 mm, the thickness T₃ mm of the negative electrode substrate 111 is 0.004 mm, the total thickness T₄ mm of the positive electrode substrate 121 and the positive electrode active material layer 122 is 0.12 mm, the thickness T₅ mm of the positive electrode substrate 121 is 0.005 mm, the length H₁ of the negative electrode tab 113 in the first direction Z is 2 mm, the length H₂ of the positive electrode tab 123 in the first direction Z is 2 mm, the 2H₁-2T₁×n-(T₂-T₃) is 3.044, the 2H₂-2T₁×(n+2)-2T₂-(T₄-T₅) is 2.685, the length L₁ mm of the positive electrode tab in the second direction X is 1 mm, the length L₂ mm of the negative electrode tab in the second direction X is 1 mm, the distance W₁ mm between two adjacent positive electrode tabs in the second direction X is 0.5 mm, the distance W₂ mm between two adjacent negative electrode tabs in the second direction X is 0.5 mm, the angle α₁ between the axis of the positive electrode tab and the second direction X is 10°, and the angle α₂ between the axis of the negative electrode tab and the second direction X is 10°.

### Example 2

The lithium-ion battery in this example is prepared according to the method in Example 1, with the differences that:
the thickness T₁ of the separator 130 is 0.015 mm, the 2H₁-2T₁×n-(T₂-T₃) is 3.244, and the 2H₂-2T₁×(n+2)-2T₂-(T₄-T₅) is 2.905.

### Example 3

The lithium-ion battery in this example is prepared according to the method in Example 1, with the differences that:
the thickness T₁ mm of the separator 130 is 0.011 mm, the 2H₁-2T₁×n-(T₂-T₃) is 3.404, and the 2H₂-2T₁×(n+2)-2T₂-(T₄-T₅) is 3.081.

### Example 4

The lithium-ion battery in this example is prepared according to the method in Example 1, with the differences that:
the thickness T₁ mm of the separator 130 is 0.009 mm, the 2H₁-2T₁×n-(T₂-T₃) is 3.484, and the 2H₂-2T₁×(n+2)-2T₂-(T₄-T₅) is 3.169.

### Example 5

The lithium-ion battery in this example is prepared according to the method in Example 1, with the differences that:
the thickness T₁ mm of the separator 130 is 0.006 mm, the 2H₁-2T₁×n-(T₂-T₃) is 3.604, and the 2H₂-2T₁×(n+2)-2T₂-(T₄-T₅) is 3.301.

### Example 6

The lithium-ion battery in this example is prepared according to the method in Example 1, with the differences that:
the thickness T₂ mm of the portion of the negative electrode sheet 110 having the negative electrode active material layer 112 is 0.2 mm; the 2H₁-2T₁×n-(T₂-T₃) is 3.004; and the 2H₂-2T₁×(n+2)-2T₂-(T₄-T₅) is 2.605.

### Example 7

The lithium-ion battery in this example is prepared according to the method in Example 1, with the differences that:
the total thickness T₂ mm of the negative electrode substrate 111 and the negative electrode active material layer 112 is 0.15 mm, the 2H₁-2T₁×n-(T₂-T₃) is 3.054, and the 2H₂-2T₁×(n+2)-2T₂-(T₄-T₅) is 2.705.

### Example 8

The lithium-ion battery in this example is prepared according to the method in Example 1, with the differences that:
the total thickness T₂ mm of the negative electrode substrate 111 and the negative electrode active material layer 112 is 0.1 mm, the 2H₁-2T₁×n-(T₂-T₃) is 3.104, and the 2H₂-2T₁×(n+2)-2T₂-(T₄-T₅) is 2.805.

### Example 9

The lithium-ion battery in this example is prepared according to the method in Example 1, with the differences that:
the total thickness T₂ mm of the negative electrode substrate 111 and the negative electrode active material layer 112 is 0.05 mm, the 2H₁-2T₁×n-(T₂-T₃) is 3.154, and the 2H₂-2T₁×(n+2)-2T₂-(T₄-T₅) is 2.905.

### Example 10

The lithium-ion battery in this example is prepared according to the method in Example 1, with the differences that:
the thickness T₃ mm of the negative electrode substrate 111 is 0.0045 mm, and the 2H₁-2T₁×n-(T₂-T₃) is 3.0445.

### Example 11

The lithium-ion battery in this example is prepared according to the method in Example 1, with the differences that:
the thickness T₃ mm of the negative electrode substrate 111 is 0.006 mm, and the 2H₁-2T₁×n-(T₂-T₃) is 3.046.

### Example 12

The lithium-ion battery in this example is prepared according to the method in Example 1, with the differences that:
the thickness T₃ mm of the negative electrode substrate 111 is 0.008 mm, and the 2H₁-2T₁×n-(T₂-T₃) is 3.048.

### Example 13

The lithium-ion battery in this example is prepared according to the method in Example 1, with the differences that:
the thickness T₃ mm of the negative electrode substrate 111 is 0.02 mm, and the 2H₁-2T₁×n-(T₂-T₃) is 3.06.

### Example 14

The lithium-ion battery in this example is prepared according to the method in Example 1, with the differences that:
the number of separator-only winding turns of the separator 130 is 10 turns, the 2H₁-2T₁×n-(T₂-T₃) is 3.444, and the 2H₂-2T₁×(n+2)-2T₂-(T₄-T₅) is 3.085.

### Example 15

The lithium-ion battery in this example is prepared according to the method in Example 1, with the differences that:
the number of separator-only winding turns of the separator 130 is 8 turns, the 2H₁-2T₁×n-(T₂-T₃) is 3.524, and the 2H₂-2T₁×(n+2)-2T₂-(T₄-T₅) is 3.165.

### Example 16

The lithium-ion battery in this example is prepared according to the method in Example 1, with the differences that:
the number of separator-only winding turns of the separator 130 is 5 turns, the 2H₁-2T₁×n-(T₂-T₃) is 3.644, and the 2H₂-2T₁×(n+2)-2T₂-(T₄-T₅) is 3.285.

### Example 17

The lithium-ion battery in this example is prepared according to the method in Example 1, with the differences that:
the number of separator-only winding turns of the separator 130 is 1 turn, the 2H₁-2T₁×n-(T₂-T₃) is 3.804, and the 2H₂-2T₁×(n+2)-2T₂-(T₄-T₅) is 3.445.

### Example 18

The lithium-ion battery in this example is prepared according to the method in Example 1, with the differences that:
the length H₁ mm of the negative electrode tab 113 in the first direction Z is 3 mm, and the 2H₁-2T₁×n-(T₂-T₃) is 5.044.

### Example 19

The lithium-ion battery in this example is prepared according to the method in Example 1, with the differences that:
the length H₁ mm of the negative electrode tab 113 in the first direction Z is 3.2 mm, and the 2H₁-2T₁×n-(T₂-T₃) is 5.444.

### Example 20

The lithium-ion battery in this example is prepared according to the method in Example 1, with the differences that:
the length H₁ mm of the negative electrode tab 113 in the first direction Z is 3.8 mm, and the 2H₁-2T₁×n-(T₂-T₃) is 6.644.

### Example 21

The lithium-ion battery in this example is prepared according to the method in Example 1, with the differences that:
the length H₁ mm of the negative electrode tab 113 in the first direction Z is 4 mm, and the 2H₁-2T₁×n-(T₂-T₃) is 7.044.

### Example 22

The lithium-ion battery in this example is prepared according to the method in Example 1, with the differences that:
the length H₂ mm of the positive electrode tab 123 in the first direction Z is 3 mm, and the 2H₂-2T₁×(n+2)-2T₂-(T₄-T₅) is 4.685.

### Example 23

The lithium-ion battery in this example is prepared according to the method in Example 1, with the differences that:
the length H₂ of the positive electrode tab 123 in the first direction Z is 3.2 mm, and the 2H₂-2T₁×(n+2)-2T₂-(T₄-T₅) is 5.085.

### Example 24

The lithium-ion battery in this example is prepared according to the method in Example 1, with the differences that:
the length H₂ mm of the positive electrode tab 123 in the first direction Z is 3.5 mm, and the 2H₂-2T₁×(n+2)-2T₂-(T₄-T₅) is 5.685.

### Example 25

The lithium-ion battery in this example is prepared according to the method in Example 1, with the differences that:
the length H₂ mm of the positive electrode tab 123 in the first direction Z is 4 mm, and the 2H₂-2T₁×(n+2)-2T₂-(T₄-T₅) is 6.685.

### Example 26

The lithium-ion battery in this example is prepared according to the method in Example 1, with the differences that:
the thickness T₁ mm of the separator 130 is 0.01 mm, the total thickness T₂ mm of the negative electrode substrate 111 and the negative electrode active material layer 112 is 0.2 mm, the thickness T₃ mm of the negative electrode substrate 111 is 0.0045 mm, the length H₁ mm of the negative electrode tab 113 in the first direction Z is 2.1 mm, the 2H₁-2T₁×n-(T₂-T₃) is 3.6045, and the 2H₂-2T₁×(n+2)-2T₂-(T₄-T₅) is 3.045.

### Example 27

The lithium-ion battery in this example is prepared according to the method in Example 1, with the differences that:
the thickness T₁ mm of the separator 130 is 0.015 mm, the total thickness T₂ mm of the negative electrode substrate 111 and the negative electrode active material layer 112 is 0.15 mm, the thickness T₃ mm of the negative electrode substrate 111 is 0.006 mm, the length H₁ mm of the negative electrode tab 113 in the first direction Z is 2.3 mm, the 2H₁-2T₁×n-(T₂-T₃) is 3.856, and the 2H₂-2T₁×(n+2)-2T₂-(T₄-T₅) is 2.925.

### Example 28

The lithium-ion battery in this example is prepared according to the method in Example 1, with the differences that:
the thickness T₁ mm of the separator 130 is 0.018 mm, the total thickness T₂ mm of the negative electrode substrate 111 and the negative electrode active material layer 112 is 0.1 mm, the thickness T₃ mm of the negative electrode substrate 111 is 0.008 mm, the length H₁ mm of the negative electrode tab 113 in the first direction Z is 2.8 mm, the 2H₁-2T₁×n-(T₂-T₃) is 4.788, and the 2H₂-2T₁×(n+2)-2T₂-(T₄-T₅) is 2.893.

### Example 29

The lithium-ion battery in this example is prepared according to the method in Example 1, with the differences that:
the thickness T₁ mm of the separator 130 is 0.02 mm, the total thickness T₂ mm of the negative electrode substrate 111 and the negative electrode active material layer 112 is 0.05 mm, the thickness T₃ mm of the negative electrode substrate 111 is 0.02 mm, the length H₁ mm of the negative electrode tab 113 in the first direction Z is 3 mm, the 2H₁-2T₁×n-(T₂-T₃) is 5.17, and the 2H₂-2T₁×(n+2)-2T₂-(T₄-T₅) is 2.905.

### Example 30

The lithium-ion battery in this example is prepared according to the method in Example 1, with the differences that:
the total thickness T₄ mm of the positive electrode substrate 121 and the positive electrode active material layer 122 is 0.2 mm, the thickness T₅ mm of the positive electrode substrate 121 is 0.01 mm, the length H₂ mm of the positive electrode tab 123 in the first direction Z is 2.1 mm, and the 2H₂-2T₁×(n+2)-2T₂-(T₄-T₅) is 2.81.

### Example 31

The lithium-ion battery in this example is prepared according to the method in Example 1, with the differences that:
the total thickness T₄ mm of the positive electrode substrate 121 and the positive electrode active material layer 122 is 0.15 mm, the thickness T₅ mm of the positive electrode substrate 121 is 0.013 mm, the length H₂ mm of the positive electrode tab 123 in the first direction Z is 2.3 mm, and the 2H₂-2T₁×(n+2)-2T₂-(T₄-T₅) is 3.263.

### Example 32

The lithium-ion battery in this example is prepared according to the method in Example 1, with the differences that:
the total thickness T₄ mm of the positive electrode substrate 121 and the positive electrode active material layer 122 is 0.1 mm, the thickness T₅ mm of the positive electrode substrate 121 is 0.015 mm, the length H₂ mm of the positive electrode tab 123 in the first direction Z is 2.6 mm, and the 2H₂-2T₁×(n+2)-2T₂-(T₄-T₅) is 3.915.

### Example 33

The lithium-ion battery in this example is prepared according to the method in Example 1, with the differences that:
the total thickness T₄ mm of the positive electrode substrate 121 and the positive electrode active material layer 122 is 0.05 mm, the thickness T₅ mm of the positive electrode substrate 121 is 0.03 mm, the length H₂ mm of the positive electrode tab 123 in the first direction Z is 3.1 mm, and the 2H₂-2T₁×(n+2)-2T₂-(T₄-T₅) is 4.98.

### Example 34

The lithium-ion battery in this example is prepared according to the method in Example 1, with the differences that:
the thickness T₁ mm of the separator 130 is 0.015 mm, the number of separator-only winding turns n of the separator 130 is 10 turns, the total thickness T₂ mm of the negative electrode substrate 111 and the negative electrode active material layer 112 is 0.2 mm, the thickness T₃ mm of the negative electrode substrate 111 is 0.0045 mm, the total thickness T₄ mm of the positive electrode substrate 121 and the positive electrode active material layer 122 is 0.2 mm, the thickness T₅ mm of the positive electrode substrate 121 is 0.01 mm, the length H₁ mm of the negative electrode tab 113 in the first direction Z is 4 mm, the length H₂ mm of the positive electrode tab 123 in the first direction Z is 4 mm, the 2H₁-2T₁×n-(T₂-T₃) is 7.5045, and the 2H₂-2T₁×(n+2)-2T₂-(T₄-T₅) is 7.05.

### Example 35

The lithium-ion battery in this example is prepared according to the method in Example 1, with the differences that:
the thickness T₁ mm of the separator 130 is 0.011 mm, the number of separator-only winding turns n of the separator 130 is 8 turns, the total thickness T₂ mm of the negative electrode substrate 111 and the negative electrode active material layer 112 is 0.15 mm, the thickness T₃ mm of the negative electrode substrate 111 is 0.006 mm, the total thickness T₄ mm of the positive electrode substrate 121 and the positive electrode active material layer 122 is 0.15 mm, the thickness T₅ mm of the positive electrode substrate 121 is 0.013 mm, the length H₁ mm of the negative electrode tab 113 in the first direction Z is 5 mm, the length H₂ mm of the positive electrode tab 123 in the first direction Z is 5 mm, the 2H₁-2T₁×n-(T₂-T₃) is 9.68, and the 2H₂-2T₁×(n+2)-2T₂-(T₄-T₅) is 9.343.

### Example 36

The lithium-ion battery in this example is prepared according to the method in Example 1, with the differences that:
the thickness T₁ mm of the separator 130 is 0.009 mm, the number of separator-only winding turns n of the separator 130 is 5 turns, the total thickness T₂ mm of the negative electrode substrate 111 and the negative electrode active material layer 112 is 0.1 mm, the thickness T₃ mm of the negative electrode substrate 111 is 0.008 mm, the total thickness T₄ mm of the positive electrode substrate 121 and the positive electrode active material layer 122 is 0.1 mm, the thickness T₅ mm of the positive electrode substrate 121 is 0.015 mm, the length H₁ mm of the negative electrode tab 113 in the first direction Z is 6 mm, the length H₂ mm of the positive electrode tab 123 in the first direction Z is 6 mm, the 2H₁-2T₁×n-(T₂-T₃) is 11.818, and the 2H₂-2T₁×(n+2)-2T₂-(T₄-T₅) is 11.589.

### Example 37

The lithium-ion battery in this example is prepared according to the method in Example 1, with the differences that:
the thickness T₁ mm of the separator 130 is 0.006 mm, the number of separator-only winding turns n of the separator 130 is 1 turn, the total thickness T₂ mm of the negative electrode substrate 111 and the negative electrode active material layer 112 is 0.05 mm, the thickness T₃ mm of the negative electrode substrate 111 is 0.02 mm, the total thickness T₄ mm of the positive electrode substrate 121 and the positive electrode active material layer 122 is 0.05 mm, the thickness T₅ mm of the positive electrode substrate 121 is 0.03 mm, the length H₁ mm of the negative electrode tab 113 in the first direction Z is 10 mm, the length H₂ mm of the positive electrode tab 123 in the first direction Z is 10 mm, the 2H₁-2T₁×n-(T₂-T₃) is 19.958, and the 2H₂-2T₁×(n+2)-2T₂-(T₄-T₅) is 19.844.

### Example 38

The lithium-ion battery in this example is prepared according to the method in Example 1, with the differences that:
the thickness T₁ mm of the separator 130 is 0.02 mm, the number of separator-only winding turns n of the separator 130 is 20 turns, the total thickness T₂ mm of the negative electrode substrate 111 and the negative electrode active material layer 112 is 0.5 mm, the thickness T₃ mm of the negative electrode substrate 111 is 0.002 mm, the total thickness T₄ mm of the positive electrode substrate 121 and the positive electrode active material layer 122 is 0.5 mm, the thickness T₅ mm of the positive electrode substrate 121 is 0.002 mm, the length H₁ mm of the negative electrode tab 113 in the first direction Z is 2 mm, the length H₂ mm of the positive electrode tab 123 in the first direction Z is 2 mm, the 2H₁-2T₁×n-(T₂-T₃) is 2.702, and the 2H₂-2T₁×(n+2)-2T₂-(T₄-T₅) is 1.622.

### Example 39

The lithium-ion battery in this example is prepared according to the method in Example 1, with the differences that:
the length L₁ mm of the positive electrode tab in the second direction X is 2 mm, and the length L₂ mm of the negative electrode tab in the second direction X is 2 mm, the distance W₁ mm between two adjacent positive electrode tabs in the second direction X is 0.75 mm, the distance W₂ mm between two adjacent negative electrode tabs in the second direction X is 0.75 mm, the angle α₁ between the axis of the positive electrode tab and the second direction X is 20°, and the angle α₂ between the axis of the negative electrode tab and the second direction X is 20°.

### Example 40

The lithium-ion battery in this example is prepared according to the method in Example 1, with the differences that:
the length L₁ mm of the positive electrode tab in the second direction X is 3 mm, the length L₂ mm of the negative electrode tab in the second direction X is 3 mm, the distance W₁ mm between two adjacent positive electrode tabs in the second direction X is 1 mm, the distance W₂ mm between two adjacent negative electrode tabs in the second direction X is 1 mm, the angle α₁ between the axis of the positive electrode tab and the second direction X is 30°, and the angle α₂ between the axis of the negative electrode tab and the second direction X is 30°.

### Example 41

The lithium-ion battery in this example is prepared according to the method in Example 1, with the differences that:
the length L₁ mm of the positive electrode tab in the second direction X is 4 mm, the length L₂ mm of the negative electrode tab in the second direction X is 4 mm, the distance W₁ mm between two adjacent positive electrode tabs in the second direction X is 1.5 mm, the distance W₂ mm between two adjacent negative electrode tabs in the second direction X is 1.5 mm, the angle α₁ between the axis of the positive electrode tab and the second direction X is 45°, and the angle α₂ between the axis of the negative electrode tab and the second direction X is 45°.

### Example 42

The lithium-ion battery in this example is prepared according to the method in Example 1, with the differences that:
the length L₁ mm of the positive electrode tab in the second direction X is 5 mm, the length L₂ mm of the negative electrode tab in the second direction X is 5 mm, the distance W₁ mm between two adjacent positive electrode tabs in the second direction X is 2 mm, the distance W₂ mm between two adjacent negative electrode tabs in the second direction X is 2 mm, the angle α₁ between the axis of the positive electrode tab and the second direction X is 60°, and the angle α₂ between the axis of the negative electrode tab and the second direction X is 60°.

### Example 43

The lithium-ion battery in this example is prepared according to the method in Example 1, with the differences that:
the length L₁ mm of the positive electrode tab in the second direction X is 6 mm, the length L₂ mm of the negative electrode tab in the second direction X is 6 mm, the distance W₁ mm between two adjacent positive electrode tabs in the second direction X is 2.5 mm, the distance W₂ mm between two adjacent negative electrode tabs in the second direction X is 2.5 mm, the angle α₁ between the axis of the positive electrode tab and the second direction X is 70°, and the angle α₂ between the axis of the negative electrode tab and the second direction X is 70°.

### Example 44

The lithium-ion battery in this example is prepared according to the method in Example 1, with the differences that:
the length L₁ mm of the positive electrode tab in the second direction X is 7 mm, the length L₂ mm of the negative electrode tab in the second direction X is 7 mm, the distance W₁ mm between two adjacent positive electrode tabs in the second direction X is 3 mm, the distance W₂ mm between two adjacent negative electrode tabs in the second direction X is 3 mm, the angle α₁ between the axis of the positive electrode tab and the second direction X is 75°, and the angle α₂ between the axis of the negative electrode tab and the second direction X is 75°.

### Example 45

The lithium-ion battery in this example is prepared according to the method in Example 1, with the differences that:
the length L₁ mm of the positive electrode tab in the second direction X is 8 mm, the length L₂ mm of the negative electrode tab in the second direction X is 8 mm, the distance W₁ mm between two adjacent positive electrode tabs in the second direction X is 4 mm, the distance W₂ mm between two adjacent negative electrode tabs in the second direction X is 4 mm, the angle α₁ between the axis of the positive electrode tab and the second direction X is 80°, and the angle α₂ between the axis of the negative electrode tab and the second direction X is 80°.

### Example 46

The lithium-ion battery in this example is prepared according to the method in Example 1, with the differences that:
the length L₁ mm of the positive electrode tab in the second direction X is 9 mm, the length L₂ mm of the negative electrode tab in the second direction X is 9 mm, the distance W₁ mm between two adjacent positive electrode tabs in the second direction X is 4.5 mm, the distance W₂ mm between two adjacent negative electrode tabs in the second direction X is 4.5 mm, the angle α₁ between the axis of the positive electrode tab and the second direction X is 85°, and the angle α₂ between the axis of the negative electrode tab and the second direction X is 85°.

### Example 47

The lithium-ion battery in this example is prepared according to the method in Example 1, with the differences that:
the length L₁ mm of the positive electrode tab in the second direction X is 10 mm, the length L₂ mm of the negative electrode tab in the second direction X is 10 mm, the distance W₁ mm between two adjacent positive electrode tabs in the second direction X is 5 mm, the distance W₂ mm between two adjacent negative electrode tabs in the second direction X is 5 mm, the angle α₁ between the axis of the positive electrode tab and the second direction X is 90°, and the angle α₂ between the axis of the negative electrode tab and the second direction X is 90°.

### Example 48

The lithium-ion battery in this example is prepared according to the method in Example 1, with the differences that:
the length L₁ mm of the positive electrode tab in the second direction X is 0.5 mm, the length L₂ mm of the negative electrode tab in the second direction X is 0.5 mm, the distance W₁ mm between two adjacent positive electrode tabs in the second direction X is 0.2 mm, the distance W₂ mm between two adjacent negative electrode tabs in the second direction X is 0.2 mm, the angle α₁ between the axis of the positive electrode tab and the second direction X is 0, and the angle α₂ between the axis of the negative electrode tab and the second direction X is 0.

### Example 49

The lithium-ion battery in this example is prepared according to the method in Example 1, with the differences that:
the length L₁ mm of the positive electrode tab in the second direction X is 12 mm, the length L₂ mm of the negative electrode tab in the second direction X is 12 mm, the distance W₁ mm between two adjacent positive electrode tabs in the second direction X is 7 mm, the distance W₂ mm between two adjacent negative electrode tabs in the second direction X is 7 mm, the angle α₁ between the axis of the positive electrode tab and the second direction X is 100°, and the angle α₂ between the axis of the negative electrode tab and the second direction X is 100°.

### Comparative Example 1

The lithium-ion battery in this comparative example is prepared according to the method in Example 1, with the differences that:
the thickness T₁ mm of the separator 130 is 0.03 mm, the number of separator-only winding turns n of the separator 130 is 22 turns, the total thickness T₂ mm of the negative electrode substrate 111 and the negative electrode active material layer 112 is 0.7 mm, the thickness T₃ mm of the negative electrode substrate 111 is 0.001 mm, the total thickness T₄ mm of the positive electrode substrate 121 and the positive electrode active material layer 122 is 0.7 mm, the thickness T₅ mm of the positive electrode substrate 121 is 0.001 mm, the length H₁ mm of the negative electrode tab 113 in the first direction Z is 1.8 mm, the length H₂ mm of the positive electrode tab 123 in the first direction Z is 1.8 mm, the 2H₁-2T₁×n-(T₂-T₃) is 1.581, and the 2H₂-2T₁×(n+2)-2T₂-(T₄-T₅) is 0.061.

### Comparative Example 2

The lithium-ion battery in this comparative example is prepared according to the method in Example 1, with the differences that:
the thickness T₁ mm of the separator 130 is 0.004 mm, the number of separator-only winding turns n of the separator 130 is 0 turn, the total thickness T₂ mm of the negative electrode substrate 111 and the negative electrode active material layer 112 is 0.03 mm, the thickness T₃ mm of the negative electrode substrate 111 is 0.03 mm, the total thickness T₄ mm of the positive electrode substrate 121 and the positive electrode active material layer 122 is 0.03 mm, the thickness T₅ mm of the positive electrode substrate 121 is 0.04 mm, the length H₁ mm of the negative electrode tab 113 in the first direction Z is 12 mm, the length H₂ mm of the positive electrode tab 123 in the first direction Z is 12 mm, the 2H₁-2T₁×n-(T₂-T₃) is 24, and the 2H₂-2T₁×(n+2)-2T₂-(T₄-T₅) is 23.934.

The batteries prepared in the above Examples and Comparative examples are subjected to performance tests, and the specific testing methods are as follows.

### 1.Testing method for the cycling performance of the lithium-ion batteries

The prepared lithium-ion batteries are charged to their nominal capacity at a constant capacity and at a rate of 1C, and discharged to 2.5V at a rate of 1C at 25°C for cycle testing, until the capacity of the lithium-ion secondary batteries decays to 80% of their initial capacity, and the number of cycles are recorded.

The relevant parameters and test results for the above Examples and Comparative examples are recorded in Tables 1-2.

**Table 1 Parameters and Test Results of Examples 1-38 and Comparative Examples 1-2**

| | T₁ | T₂ | T₃ | T₄ | T₅ | n | H₁ | H₂ | 2H₁-2T₁× n-(T₂-T₃) | 2H₂-2T₁× (n+2)-2T₂-(T₄-T₅) | Cycle life (turns) |
|---|---|---|---|---|---|---|---|---|---|---|---|
| Example 1 | 0.02 | 0.16 | 0.004 | 0.12 | 0.005 | 20 | 2 | 2 | 3.044 | 2.685 | 700 |
| Example 2 | 0.015 | 0.16 | 0.004 | 0.12 | 0.005 | 20 | 2 | 2 | 3.244 | 2.905 | 800 |
| Example 3 | 0.011 | 0.16 | 0.004 | 0.12 | 0.005 | 20 | 2 | 2 | 3.404 | 3.081 | 900 |
| Example 4 | 0.009 | 0.16 | 0.004 | 0.12 | 0.005 | 20 | 2 | 2 | 3.484 | 3.169 | 1000 |
| Example 5 | 0.006 | 0.16 | 0.004 | 0.12 | 0.005 | 20 | 2 | 2 | 3.604 | 3.301 | 1100 |
| Example 6 | 0.02 | 0.2 | 0.004 | 0.12 | 0.005 | 20 | 2 | 2 | 3.004 | 2.605 | 650 |
| Example 7 | 0.02 | 0.15 | 0.004 | 0.12 | 0.005 | 20 | 2 | 2 | 3.054 | 2.705 | 700 |
| Example 8 | 0.02 | 0.1 | 0.004 | 0.12 | 0.005 | 20 | 2 | 2 | 3.104 | 2.805 | 750 |
| Example 9 | 0.02 | 0.05 | 0.004 | 0.12 | 0.005 | 20 | 2 | 2 | 3.154 | 2.905 | 800 |
| Example 10 | 0.02 | 0.16 | 0.0045 | 0.12 | 0.005 | 20 | 2 | 2 | 3.0445 | 2.685 | 720 |
| Example 11 | 0.02 | 0.16 | 0.006 | 0.12 | 0.005 | 20 | 2 | 2 | 3.046 | 2.685 | 740 |
| Example 12 | 0.02 | 0.16 | 0.008 | 0.12 | 0.005 | 20 | 2 | 2 | 3.048 | 2.685 | 760 |
| Example 13 | 0.02 | 0.16 | 0.02 | 0.12 | 0.005 | 20 | 2 | 2 | 3.06 | 2.685 | 780 |
| Example 14 | 0.02 | 0.16 | 0.004 | 0.12 | 0.005 | 10 | 2 | 2 | 3.444 | 3.085 | 900 |
| Example 15 | 0.02 | 0.16 | 0.004 | 0.12 | 0.005 | 8 | 2 | 2 | 3.524 | 3.165 | 1000 |
| Example 16 | 0.02 | 0.16 | 0.004 | 0.12 | 0.005 | 5 | 2 | 2 | 3.644 | 3.285 | 1100 |
| Example 17 | 0.02 | 0.16 | 0.004 | 0.12 | 0.005 | 1 | 2 | 2 | 3.804 | 3.445 | 1200 |
| Example 18 | 0.02 | 0.16 | 0.004 | 0.12 | 0.005 | 20 | 3 | 2 | 5.044 | 2.685 | 1250 |
| Example 19 | 0.02 | 0.16 | 0.004 | 0.12 | 0.005 | 20 | 3.2 | 2 | 5.444 | 2.685 | 1300 |
| Example 20 | 0.02 | 0.16 | 0.004 | 0.12 | 0.005 | 20 | 3.8 | 2 | 6.644 | 2.685 | 1500 |
| Example 21 | 0.02 | 0.16 | 0.004 | 0.12 | 0.005 | 20 | 4 | 2 | 7.044 | 2.685 | 1700 |
| Example 22 | 0.02 | 0.16 | 0.004 | 0.12 | 0.005 | 20 | 2 | 3 | 3.044 | 4.685 | 1100 |
| Example 23 | 0.02 | 0.16 | 0.004 | 0.12 | 0.005 | 20 | 2 | 3.2 | 3.044 | 5.085 | 1200 |
| Example 24 | 0.02 | 0.16 | 0.004 | 0.12 | 0.005 | 20 | 2 | 3.5 | 3.044 | 5.685 | 1300 |
| Example 25 | 0.02 | 0.16 | 0.004 | 0.12 | 0.005 | 20 | 2 | 4 | 3.044 | 6.685 | 1500 |
| Example 26 | 0.01 | 0.2 | 0.0045 | 0.12 | 0.005 | 20 | 2.1 | 2 | 3.6045 | 3.045 | 1000 |
| Example 27 | 0.015 | 0.15 | 0.006 | 0.12 | 0.005 | 20 | 2.3 | 2 | 3.856 | 2.925 | 1090 |
| Example 28 | 0.018 | 0.1 | 0.008 | 0.12 | 0.005 | 20 | 2.8 | 2 | 4.788 | 2.893 | 1160 |
| Example 29 | 0.02 | 0.05 | 0.02 | 0.12 | 0.005 | 20 | 3 | 2 | 5.17 | 2.905 | 1230 |
| Example 30 | 0.02 | 0.16 | 0.002 | 0.2 | 0.01 | 20 | 2 | 2.1 | 3.042 | 2.81 | 810 |
| Example 31 | 0.02 | 0.16 | 0.002 | 0.15 | 0.013 | 20 | 2 | 2.3 | 3.042 | 3.263 | 830 |
| Example 32 | 0.02 | 0.16 | 0.002 | 0.1 | 0.015 | 20 | 2 | 2.6 | 3.042 | 3.915 | 870 |
| Example 33 | 0.02 | 0.16 | 0.002 | 0.05 | 0.03 | 20 | 2 | 3.1 | 3.042 | 4.98 | 955 |
| Example 34 | 0.015 | 0.2 | 0.0045 | 0.2 | 0.01 | 10 | 4 | 4 | 7.5045 | 7.05 | 1800 |
| Example 35 | 0.011 | 0.15 | 0.006 | 0.15 | 0.013 | 8 | 5 | 5 | 9.68 | 9.343 | 2000 |
| Example 36 | 0.009 | 0.1 | 0.008 | 0.1 | 0.015 | 5 | 6 | 6 | 11.818 | 11.589 | 1800 |
| Example 37 | 0.006 | 0.05 | 0.02 | 0.05 | 0.03 | 1 | 10 | 10 | 19.958 | 19.844 | 790 |
| Example 38 | 0.02 | 0.5 | 0.002 | 0.5 | 0.002 | 20 | 2 | 2 | 2.702 | 1.622 | 600 |
| Comparative Example 1 | 0.03 | 0.7 | 0.001 | 0.7 | 0.001 | 22 | 1.8 | 1.8 | 1.581 | 0.061 | 400 |
| Comparative Example 2 | 0.004 | 0.03 | 0.03 | 0.03 | 0.04 | 0 | 12 | 12 | 24 | 23.934 | 500 |

Analysis of the results: it can be seen from the data analysis of the Examples and Comparative examples in Table 1 that, when the 2H₁-2T₁×n-(T₂-T₃) is less than 2.702, the middle part of the electrode assembly is prone to deformation and collapse, thereby affecting the interface between the positive electrode and the negative electrode, resulting in low battery cycle life.

When the 2H₁-2T₁×n-(T₂-T₃) is greater than 19.958, the interface between the positive electrode sheet and the negative electrode sheet is poor, leading to low cycle life of the battery cell.

In summary, in the present application, by defining the 2H₁-2T₁×n-(T₂-T₃) within the range of 2.702-19.958, the height of the tab is minimized while ensuring the flattened surface of the tab after flattening in the battery cell, thereby reducing the stacking height of the tab; while it is ensured that the thickness of the separator is minimized and the total thickness of the active material layer is maximized, thereby increasing the height and thickness of the portion of the electrode sheet having the active material layer. This enhances the cycle life of the battery cell, thereby improving the comprehensive performance of the battery cell.

Optionally, in the present application, by defining the 2H₁-2T₁×n-(T₂-T₃) within the range of 7.5045-11.818, the cycle life of the battery cell is enhanced, thereby improving the comprehensive performance of the battery cell.

Compared to the Comparative examples, the cycle life of the battery cells in the present application has been significantly improved.

**Table 2 Parameters and Test Results of Example 1, and Examples 39-49**

| | L₁ | W₁ | α₁ | L₂ | W₂ | α₂ | Cycle life (turns) |
|---|---|---|---|---|---|---|---|
| Example 1 | 1 | 0.5 | 10° | 1 | 0.5 | 10° | 1000 |
| Example 39 | 2 | 0.75 | 20° | 2 | 0.75 | 20° | 1200 |
| Example 40 | 3 | 1 | 30° | 3 | 1 | 30° | 2000 |
| Example 41 | 4 | 1.5 | 45° | 4 | 1.5 | 45° | 2100 |
| Example 42 | 5 | 2 | 60° | 5 | 2 | 60° | 2000 |
| Example 43 | 6 | 2.5 | 70° | 6 | 2.5 | 70° | 1900 |
| Example 44 | 7 | 3 | 75° | 7 | 3 | 75° | 1800 |
| Example 45 | 8 | 4 | 80° | 8 | 4 | 80° | 1700 |
| Example 46 | 9 | 4.5 | 85° | 9 | 4.5 | 85° | 1600 |
| Example 47 | 10 | 5 | 90° | 10 | 5 | 90° | 1500 |
| Example 48 | 0.5 | 0.2 | 0 | 0.5 | 0.2 | 0 | 600 |
| Example 49 | 12 | 7 | 100° | 12 | 7 | 100° | 700 |

Analysis of the results: it can be seen from the data analysis of the examples in Table 2 that, when the length L₁ mm of the positive electrode tab in the second direction X is less than 1 mm, the length L₂ mm of the negative electrode tab in the second direction X is less than 1 mm, the distance W₁ mm between two adjacent positive electrode tabs in the second direction X is less than 0.5 mm, the distance W₂ mm between two adjacent negative electrode tabs in the second direction X is less than 0.5 mm, the angle α₁ between the axis of the positive electrode tab and the second direction X is equal to 10°, and the angle α₂ between the axis of the negative electrode tab and the second direction X is equal to 10°, the tabs are prone to folding during winding. This affects the subsequent flattening of the tabs, further affecting the electronic conduction path between the end face of the tabs and the current collector plate, and leading to low cycle life of the battery cell.

When the length L₁ mm of the positive electrode tab in the second direction X is greater than 10 mm, the length L₂ mm of the negative electrode tab in the second direction X is greater than 10 mm, the distance W₁ mm between two adjacent positive electrode tabs in the second direction X is greater than 5 mm, the distance W₂ mm between two adjacent negative electrode tabs in the second direction X is greater than 5 mm, the angle α₁ between the axis of the positive electrode tab and the second direction X is greater than 90°, and the angle α₂ between the axis of the negative electrode tab and the second direction X is greater than 90°, it can result in excessive gaps inside the battery, leading to lower spatial utilization of the electrode assembly and low cycle life of the battery cell.

In summary, in the present application, by defining the length L₁ of the positive electrode tab in the second direction X within the range of 1 mm - 10 mm, the length L₂ of the negative electrode tab in the second direction X within the range of 1 mm - 10 mm, the distance W₁ between two adjacent positive electrode tabs within the range of 0 mm - 5 mm, the distance W₂ between two adjacent negative electrode tabs within the range of 0 mm - 5 mm, the angle α₁ between the axis of the positive electrode tab and the second direction X within the range of 0°-90°, and the angle α₂ between the axis of the negative electrode tab and the second direction X within the range of 0°-90°, the cycle life of the battery cell is enhanced.

Optionally, in the present application, by defining the length L₁ of the positive electrode tab in the second direction X within the range of 3 mm - 5 mm, the length L₂ of the negative electrode tab in the second direction X within the range of 3 mm - 5 mm, the distance W₁ between two adjacent positive electrode tabs within the range of 0 mm - 2 mm, the distance W₂ between two adjacent negative electrode tabs within the range of 0 mm - 2 mm, the angle α₁ between the axis of the positive electrode tab and the second direction X within the range of 30°- 60°, and the angle α₂ between the axis of the negative electrode tab and the second direction X within the range of 30°- 60°, the cycle life of the battery cell is further enhanced.

Compared to the Comparative examples, the cycle life of the battery cells in the present application has been significantly improved.

The above provides a detailed introduction to the battery cell and the battery module provided in the present application. The principles and implementations of the present application are illustrated using specific examples herein. The description of the above embodiments is intended to aid in understanding the methods and core concepts of the present application. At the same time, for those skilled in the art, changes may be made in specific implementations and application scopes based on the ideas of the present application. In summary, the content of this specification should not be construed as limiting the present application.

## Claims

1. A battery cell, having a first direction (Z), wherein the battery cell comprises:
a housing; and
an electrode assembly, accommodated in the housing;
the electrode assembly comprises: a positive electrode sheet (120), a separator (130) and a negative electrode sheet (110) that are stacked together, wherein the separator (130) is provided between the positive electrode sheet (120) and the negative electrode sheet (110), and the positive electrode sheet (120), the negative electrode sheet (110), and the separator (130) are wound together to form the electrode assembly;
the negative electrode sheet (110) comprises:
a negative electrode substrate (111);
a negative electrode active material layer (112), coated on the negative electrode substrate (111); and
a negative electrode tab (113), extending along the first direction (Z) and connected to the negative electrode substrate (111);
wherein the battery cell satisfies: 2.702 ≤ 2H₁-2T₁×n-(T₂-T₃) ≤ 19.958;
wherein H₁ mm is a length of the negative electrode tab (113) in the first direction (Z), T₁ mm is a thickness of the separator (130), n is the number of separator-only winding turns of the separator (130), T₂ mm is a total thickness of the negative electrode substrate (111) and the negative electrode active material layer (112), and T₃ mm is a thickness of the negative electrode substrate (111).

2. The battery cell according to claim 1, wherein the battery cell further satisfies: 7.5045 ≤ 2H₁-2T₁×n-(T₂-T₃) ≤ 11.818.

3. The battery cell according to claim 1, wherein the length H₁ mm of the negative electrode tab (113) in the first direction (Z) satisfies: 2 ≤ H₁ ≤ 10.

4. The battery cell according to claim 1, wherein the length H₁ mm of the negative electrode tab (113) in the first direction (Z) satisfies: 4 ≤ H₁ ≤ 6.

5. The battery cell according to claim 1, wherein the positive electrode sheet (120) comprises: a positive electrode substrate (121);
a positive electrode active material layer (122), coated on the positive electrode substrate (121); and
a positive electrode tab (123), extending along the first direction (Z) and connected to the positive electrode substrate (121);
the battery cell further satisfies: 1.622 ≤ 2H₂-2T₁×(n+2)-2T₂-(T₄-T₅) ≤ 19.844;
wherein H₂ mm is a length of the positive electrode tab (123) in the first direction (Z), T₄ mm is a total thickness of the positive electrode substrate (121) and the positive electrode active material layer (122), and T₅ mm is a thickness of the positive electrode substrate (121).

6. The battery cell according to claim 5, wherein the battery cell further satisfies: 7.05 ≤ 2H₂-2T₁×(n+2)-2T₂-(T₄-T₅) ≤ 11.589.

7. The battery cell according to claim 5, wherein the length H₂ mm of the positive electrode tab (123) in the first direction (Z) satisfies: 2 ≤ H₂ ≤ 10.

8. The battery cell according to claim 7, wherein the length H₂ mm of the positive electrode tab (123) in the first direction (Z) further satisfies: 4 ≤ H₂ ≤ 6.

9. The battery cell according to claim 1, wherein the thickness T₁ mm of the separator (130) satisfies: 0.006 ≤ T₁ ≤ 0.02; or, the thickness T₁ mm of the separator (130) satisfies: 0.009 ≤ T₁ ≤ 0.015.

10. The battery cell according to claim 1, wherein the number of separator-only winding turns n of the separator (130) satisfies: 0 < n ≤ 20; or, the number of separator-only winding turns n of the separator (130) satisfies: 5 ≤ n ≤ 10.

11. The battery cell according to claim 1, wherein the total thickness T₂ mm of the negative electrode substrate (111) and the negative electrode active material layer (112) satisfies: 0.05 ≤ T₂ ≤ 0.5;
the thickness T₃ mm of the negative electrode substrate (111) satisfies: 0.002 ≤ T₃ ≤ 0.02.

12. The battery cell according to claim 11, wherein the total thickness T₂ mm of the negative electrode substrate (111) and the negative electrode active material layer (112) satisfies: 0.1 ≤ T₂ ≤ 0.2;
the thickness T₃ mm of the negative electrode substrate (111) satisfies: 0.0045 ≤ T₃ ≤ 0.008.

13. The battery cell according to claim 5, wherein the total thickness T₄ mm of the positive electrode substrate (121) and the positive electrode active material layer (122) satisfies: 0.05≤T₄≤0.5;
the thickness T₅ mm of the positive electrode substrate (121) satisfies: 0.002 ≤ T₅ ≤ 0.03.

14. The battery cell according to claim 13, wherein the total thickness T₄ mm of the positive electrode substrate (121) and the positive electrode active material layer (122) satisfies: 0.1≤T₄≤0.2; and/or,
the thickness T₅ mm of the positive electrode substrate (121) satisfies: 0.01 ≤ T₅ ≤ 0.015.

15. The battery cell according to claim 5, wherein when the positive electrode sheet (120) is unfolded, the positive electrode sheet (120) has a second direction (X) intersecting with the first direction (Z), and a dimension of the positive electrode tab (123) in the second direction (X) is L₁ mm, satisfying: 1 ≤ L₁ ≤ 10;
a distance between two adjacent positive electrode tabs (123) in the second direction (X) is W₁ mm, satisfying: 0 < W₁ ≤ 5;
the positive electrode tab (123) has an axis, and an angle between the axis of the positive electrode tab (123) and the second direction (X) is α₁ , satisfying: 0 < α₁ ≤ 90°.

16. The battery cell according to claim 1, wherein when the negative electrode sheet (110) is unfolded, the negative electrode sheet (110) has a second direction (X) intersecting with the first direction (Z), and a dimension of the negative electrode tab (113) in the second direction (X) is L₂ mm, satisfying: 1 ≤ L₂ ≤ 10;
a distance between two adjacent negative electrode tabs (113) in the second direction (X) is W₂ mm, satisfying: 0 < W₂ ≤ 5;
the negative electrode tab (113) has an axis, and an angle between the axis of the negative electrode tab (113) and the second direction (X) is α₂, satisfying: 0 < α₂ ≤ 90°.

17. The battery cell according to claim 15, wherein the dimension L₁ mm of the positive electrode tab (123) in the second direction (X) satisfies: 3 ≤ L₁ ≤ 5;
the distance W₁ mm between two adjacent positive electrode tabs (123) in the second direction (X) satisfies: 0 < W₁ ≤ 2 mm;
the angle α₁ between the axis of the positive electrode tab (123) and the second direction (X) satisfies: 30° ≤ α₁ ≤ 60°.

18. The battery cell according to claim 16, wherein the dimension L₂ mm of the negative electrode tab (113) in the second direction (X) satisfies: 3 ≤ L₂ ≤ 5;
the distance W₂ mm between two adjacent negative electrode tabs (113) in the second direction (X) satisfies: 0 < W₂ ≤ 2;
the angle α₂ between the axis of the negative electrode tab and the second direction (X) satisfies: 30° ≤ α₂ ≤ 60°.

19. A battery module, comprising:
an accommodating box; and
the battery cell according to any one of claims 1-18, wherein the battery cell is accommodated within the accommodating box.
